# EUROPEAN PATENT APPLICATION

(11) **EP 4 517 493 A1**
(43) Date of publication of application: **05.03.2025**
(21) Application number: 23823126.0
(22) Date of filing: 13.06.2023
(51) Int. Cl.: G06F 3/0354

(54) **COMMUNICATION METHOD, COMMUNICATION SYSTEM AND MOUSE**

(30) Priority: 17.06.2022 CN 202210684464
(71) Applicant: Huawei Technologies Co., Ltd., Shenzhen, Guangdong 518129 (CN)
(72) Inventor: DUAN, Xiaoxiao, Shenzhen, Guangdong 518129 (CN); YUAN, Linjie, Shenzhen, Guangdong 518129 (CN); PENG, Guanqi, Shenzhen, Guangdong 518129 (CN); WANG, Jinbo, Shenzhen, Guangdong 518129 (CN)
(74) Representative: Thun, Clemens
(86) International application number: PCT/CN2023/099879
(87) International publication number: WO 2023/241558

(57) **Abstract**

This application provides a communication method, a communication system, and a mouse. The communication method may be applied to a mouse. According to the method, the mouse may send, to an electronic device, a mapping relationship between a channel identifier of a data channel for establishing a connection between the mouse and the electronic device and a position identifier of a layout position. The mapping relationship may be used by the electronic device to determine layout positions of a plurality of electronic devices. If the mouse establishes a connection to a new electronic device, an electronic device that has established a connection is disconnected, or the like, the communication method and the communication system for the mouse and the electronic device provided in this application help to improve efficiency of synchronizing the layout position information of arranged electronic devices, and help a peripheral connected to a plurality of electronic devices to work normally when the layout position of the electronic device changes. This is helpful to improve user experience of the electronic devices.

## Description

This application claims priority to Chinese patent application No. 202210684464.3, filed with the China National Intellectual Property Administration on June 17, 2022, and entitled "COMMUNICATION METHOD, COMMUNICATION SYSTEM, AND MOUSE", which is incorporated herein by reference in its entirety.

### TECHNICAL FIELD

This application relates to the field of terminal devices, and specifically, to a communication method, a communication system, and a mouse.

### BACKGROUND

With popularization of electronic products, a user may have a plurality of electronic devices. Different electronic devices have different software and hardware, and cooperation of a plurality of electronic devices may compensate for a functional deficiency or a performance deficiency of a single electronic device.

A plurality of electronic devices may be connected to one or more peripherals (for example, a speaker, a keyboard, and a mouse), and an appropriate arrangement of the electronic devices allows a user to efficiently control the plurality of electronic devices by using the peripheral. The setting of layout positions depends on a plurality of factors, for example, a feature (for example, a size of a display) of an electronic device, a user habit, and the like. Addition of a new electronic device or removal of an electronic device that has been added may also cause a change in a layout position relationship among the plurality of electronic devices. When the layout position relationship is changed, the peripheral connected to the plurality of electronic devices may fail to work normally. To ensure consistency of the layout position information of different electronic devices, the layout position information of the electronic devices needs to be frequently synchronized. Therefore, how to improve efficiency of synchronizing the layout position information of the plurality of electronic devices is a problem worth considering.

### SUMMARY

This application provides a communication method, a communication system, and a mouse. A mapping relationship between an identifier of a data channel and an identifier of a layout position is stored and sent through a mouse, to improve efficiency of synchronizing layout position information of a plurality of electronic devices, enable a peripheral connected to the plurality of electronic devices to work normally, and improve user experience of the electronic devices.

According to a first aspect, a communication method is provided. A mouse establishes a connection to a first electronic device through a first data channel. The mouse stores a first mapping relationship between a first channel identifier and a first position identifier, where the first channel identifier indicates the first data channel, the first position identifier indicates a first layout position, and the first mapping relationship is for determining a layout position of the first electronic device. The mouse sends the first mapping relationship to the first electronic device.

In a possible implementation, the first mapping relationship may be stored in the mouse in a preconfigured manner before the mouse is delivered from a factory, or may be saved to the mouse after being changed by a user.

In this technical solution, the mouse may store a mapping relationship between a channel identifier and a position identifier, and may be used as a server device to provide the mapping relationship to a plurality of electronic devices connected to the mouse, so that the plurality of electronic devices may receive the same mapping relationship from the mouse as client devices, to help to keep the mapping relationship on the plurality of electronic devices consistent, help to improve efficiency of synchronizing layout position information of the plurality of electronic devices, and help a peripheral connected to the plurality of electronic devices to work normally when a layout position is changed. This is helpful to improve user experience of the electronic devices.

With reference to the first aspect, in some implementations of the first aspect, before the mouse sends the first mapping relationship to the first electronic device, the mouse receives a first device identifier sent by the first electronic device, where the first device identifier indicates the first electronic device, and the mouse saves a second mapping relationship between the first channel identifier and the first device identifier, where the second mapping relationship is for determining the layout position of the first electronic device.

In this technical solution, a device identifier of an electronic device indicates an electronic device that establishes a connection to the mouse. After receiving identifier information of an electronic device, the mouse may determine that a new electronic device has established a connection to the mouse, and save a device identifier of the new electronic device to the mouse locally, so that the device identifier can be for subsequent update of layout information of a plurality of electronic devices. Implementation of this technical solution helps to improve efficiency of setting a layout position of an electronic device when the electronic device is connected to the mouse for the first time.

With reference to the first aspect, in some implementations of the first aspect, the mouse establishes a connection to a second electronic device through a second data channel; the mouse sends the first mapping relationship and the second mapping relationship to the second electronic device; and the mouse sends a third mapping relationship between a second channel identifier and a second position identifier and a fourth mapping relationship between the second channel identifier and a second device identifier to the first electronic device, where the second channel identifier indicates the second data channel, the second device identifier indicates the second electronic device, and the second position identifier indicates a second layout position.

In a possible implementation, the mouse sends the first mapping relationship, the second mapping relationship, the third mapping relationship, and the fourth mapping relationship to the first electronic device and the second electronic device separately.

In this technical solution, when the second electronic device establishes a connection to the mouse, the mouse may send, to the second electronic device, information related to the layout position of the first electronic device that is already connected to the mouse, and send, to the first electronic device, information related to a layout position of the newly connected electronic device, which helps to keep information related to layout positions of a plurality of electronic devices connected to the mouse consistent. This is helpful to improve efficiency of synchronizing layout position information between the first electronic device and the second electronic device.

With reference to the first aspect, in some implementations of the first aspect, the mouse detects whether the second electronic device is connected to the mouse; and if the mouse is disconnected from the second electronic device and the mouse is connected to the first electronic device, the mouse sends a first message to the first electronic device, where the first message indicates that the second electronic device is disconnected.

In this technical solution, when the second electronic device is disconnected from the mouse, the mouse may send the first message indicating that the second electronic device is disconnected to the first electronic device that remains connected to the mouse, to improve efficiency of updating layout position information of the electronic device that remains connected to the mouse when an electronic device is offline.

With reference to the first aspect, in some implementations of the first aspect, if the mouse is disconnected from the second electronic device and then reconnected, the mouse sends the first mapping relationship, the second mapping relationship, the third mapping relationship, and the fourth mapping relationship to the first electronic device; and the mouse sends a third message to the first electronic device, where the third message indicates that the second electronic device is reconnected.

In a possible implementation, the mouse sends the first mapping relationship, the second mapping relationship, the third mapping relationship, and the fourth mapping relationship to the first electronic device, and sends the first mapping relationship, the second mapping relationship, the third mapping relationship, and the fourth mapping relationship to the second electronic device.

In another possible implementation, the mouse sends the fourth mapping relationship to the first electronic device.

In this technical solution, when the second electronic device is disconnected from the mouse and then reconnected, the mouse may send, to the first electronic device that remains connected to the mouse, related information for determining a layout position of the newly connected second electronic device, and the mouse may further send, to the electronic device that is reconnected to the mouse, relationships between identifiers of layout positions of all electronic devices connected to the mouse and an identifier of a channel and relationships between identifiers of the electronic devices and the identifier of the channel. Therefore, implementation of this technical solution helps to improve efficiency of synchronizing layout position information of a plurality of electronic devices if an electronic device is reconnected to the mouse.

With reference to the first aspect, in some implementations of the first aspect, the mouse receives a changed first mapping relationship and a changed third mapping relationship that are sent by the first electronic device; and the mouse sends the changed first mapping relationship and the changed third mapping relationship to the second electronic device.

It should be noted that layout positions of electronic devices may reflect a mutual relationship between layout positions of different electronic devices. When the mouse is connected to a plurality of electronic devices, a change in a layout position of an electronic device also correspondingly causes a change in a layout position of another electronic device.

In this technical solution, after the first electronic device changes layout position information, the mouse may acquire the changed layout position information from the first electronic device, and the mouse may further directly send the changed layout position information to the second electronic device, so that layout position information of the first electronic device and the second electronic device can be kept consistent. This is helpful to improve efficiency of synchronizing the layout position information of the first electronic device and the second electronic device.

With reference to the first aspect, in some implementations of the first aspect, the mouse saves the changed first mapping relationship and the changed third mapping relationship.

In this technical solution, the mouse may store a changed mapping relationship related to layout position information. When a same electronic device is reconnected to the mouse again, the mouse may directly determine, through the first mapping relationship locally saved in the mouse, a layout position corresponding to the electronic device instead of obtaining the layout position from the electronic device. This is helpful to improve efficiency of synchronizing layout position information between a plurality of electronic devices.

According to a second aspect, a communication method is provided. A first electronic device establishes a connection to a mouse through a first data channel. The first electronic device receives a first mapping relationship that is between a first channel identifier and a first position identifier and that is sent by the mouse, where the first channel identifier indicates the first data channel, the first position identifier indicates a first layout position, and the first mapping relationship is for determining a layout position of the first electronic device.

In this technical solution, the mouse may store a mapping relationship between a channel identifier and a position identifier, and may be used as a server device to provide the mapping relationship to a plurality of electronic devices connected to the mouse, so that the plurality of electronic devices may receive the same mapping relationship from the mouse as client devices, to help to keep the mapping relationship on the plurality of electronic devices consistent, help to improve efficiency of synchronizing layout position information of the plurality of electronic devices, and help a peripheral connected to the plurality of electronic devices to work normally when a layout position is changed. This is helpful to improve user experience of the electronic devices.

With reference to the second aspect, in some implementations of the second aspect, if the mouse is also connected to a second electronic device, the first electronic device displays prompt information based on the layout position of the first electronic device, where the prompt information indicates to traverse from the first electronic device to a traversal area of the second electronic device.

In this technical solution, an electronic device may display, based on layout position information, an area in which a traversal operation can be performed, so that efficiency of operating and controlling a plurality of electronic devices by a user can be improved. This is helpful to improve user experience of the electronic devices.

With reference to the second aspect, in some implementations of the second aspect, the first electronic device detects a first trigger event, where the first trigger event is that the first electronic device establishes the connection to the mouse; and the first electronic device sends a first device identifier to the mouse in response to the first trigger event, where the first device identifier indicates the first electronic device.

In this technical solution, when detecting that the connection is established to the mouse, the first electronic device may send a device identifier of the first electronic device to the mouse, to establish a correspondence between the device identifier and an identifier of a layout position. The correspondence helps to improve efficiency of synchronizing layout position information between a plurality of electronic devices.

In a possible implementation, the first electronic device detects a second trigger event, where the second trigger event is changing the first mapping relationship; and in response to the second trigger event, the first electronic device sends the changed first mapping relationship to the mouse.

In this technical solution, after the first electronic device changes layout information, the first electronic device may send the changed first mapping relationship to the mouse, so that the mouse may directly send the changed first mapping relationship to another electronic device, to keep layout information of a plurality of electronic devices consistent. This is helpful to improve efficiency of synchronizing layout position information between the plurality of electronic devices.

In this technical solution, an electronic device may send a message to the mouse in response to a trigger event, so that frequency of sending information related to a layout position between the electronic device and the mouse, especially a wirelessly connected mouse, can be reduced to some extent. This is helpful to reduce power consumption of the mouse to some extent.

According to a third aspect, a communication system is provided. The communication system includes a mouse, a first electronic device, and a second electronic device, the mouse is connected to the first electronic device through a first data channel, and the mouse is connected to the second electronic device through a second data channel. The mouse is configured to store a first association relationship between a first channel identifier, a first position identifier, and a first device identifier and a second association relationship between a second channel identifier, a second position identifier, and a second device identifier. The mouse is further configured to send the first association relationship and the second association relationship to the first electronic device and the second electronic device.

The first channel identifier indicates the first data channel, the second channel identifier indicates the second data channel, the first device identifier indicates the first electronic device, the second device identifier indicates the second electronic device, the first position identifier indicates a layout position of the first electronic device, and the second position identifier indicates a layout position of the second electronic device.

In this technical solution, the mouse may store an association relationship between a channel identifier, a position identifier, and a device identifier, and may be used as a server device to provide the association relationship to a plurality of electronic devices connected to the mouse, so that the plurality of electronic devices may receive the same association relationship from the mouse as client devices, to help to keep the association relationship on the plurality of electronic devices consistent, help to improve efficiency of synchronizing layout position information of the plurality of electronic devices, and help a peripheral connected to the plurality of electronic devices to work normally when a layout position is changed. This is helpful to improve user experience of the electronic devices.

With reference to the third aspect, in some implementations of the third aspect, if it is detected that the mouse is disconnected from the second electronic device and the mouse is connected to the first electronic device, the mouse is further configured to send a first message to the first electronic device, where the first message indicates that the second electronic device is disconnected.

With reference to the third aspect, in some implementations of the third aspect, the first electronic device is further configured to detect whether the second electronic device is connected to the mouse; and if it is detected that the second electronic device is disconnected from the mouse and the first electronic device is connected to the mouse, the first electronic device is further configured to send a second message to the mouse, where the second message indicates that the second electronic device is disconnected.

In a possible implementation, the first electronic device detects, through a sensor, whether a spatial position of the second electronic device is changed, to determine whether the second electronic device is connected to the mouse.

In another possible implementation, the first electronic device determines, by detecting whether the second electronic device is in a same network environment as the first electronic device, whether the second electronic device is connected to the mouse.

With reference to the third aspect, in some implementations of the third aspect, the first association relationship includes a first mapping relationship and a second mapping relationship, and the second association relationship includes a third mapping relationship and a fourth mapping relationship; if the mouse is disconnected from the second electronic device and then reconnected, the mouse is further configured to send the first mapping relationship, the second mapping relationship, the third mapping relationship, and the fourth mapping relationship to the second electronic device; and the mouse is further configured to send a third message to the first electronic device, where the third message indicates that the second electronic device is reconnected.

The first mapping relationship is a mapping relationship between the first channel identifier and the first position identifier, the second mapping relationship is a mapping relationship between the first channel identifier and the first device identifier, the third mapping relationship is a mapping relationship between the second channel identifier and the second position identifier, and the fourth mapping relationship is a mapping relationship between the second channel identifier and the second device identifier.

With reference to the third aspect, in some implementations of the third aspect, the first association relationship includes the first mapping relationship, the second association relationship includes the third mapping relationship, the first mapping relationship is the mapping relationship between the first channel identifier and the first position identifier, and the third mapping relationship is the mapping relationship between the second channel identifier and the second position identifier; the first electronic device is further configured to send a changed first mapping relationship and a changed third mapping relationship to the mouse in response to a first operation; the mouse is further configured to store the changed first mapping relationship and the changed third mapping relationship; and the mouse is further configured to send the changed first mapping relationship and the changed third mapping relationship to the second electronic device.

It should be noted that layout positions of electronic devices may reflect a mutual relationship between layout positions of different electronic devices. When the mouse is connected to a plurality of electronic devices, a change in a layout position of an electronic device also correspondingly causes a change in a layout position of another electronic device.

With reference to the third aspect, in some implementations of the third aspect, the first operation includes: changing a spatial position relationship between the first electronic device and the second electronic device; and/or changing a layout position relationship between the first electronic device and the second electronic device.

With reference to the third aspect, in some implementations of the third aspect, the first association relationship includes the first mapping relationship, the second association relationship includes the third mapping relationship, the first mapping relationship is the mapping relationship between the first channel identifier and the first position identifier, the third mapping relationship is the mapping relationship between the second channel identifier and the second position identifier, and the first mapping relationship and the third mapping relationship are saved to the mouse in a preconfigured manner before delivery or saved to the mouse after being changed by a user.

With reference to the third aspect, in some implementations of the third aspect, the first electronic device is further configured to display a first identifier control and a second identifier control based on the first association relationship and the second association relationship; and the second electronic device is further configured to display the first identifier control and the second identifier control based on the first association relationship and the second association relationship, where the first identifier control indicates the first electronic device, the first identifier control is located at the layout position of the first electronic device, the second identifier control indicates the second electronic device, and the second identifier control is located at the layout position of the second electronic device.

According to a fourth aspect, a communication apparatus is provided, including a processing module and a transceiver module. The processing module is configured to establish a connection to a first electronic device through a first data channel. The processing module is further configured to store a first mapping relationship between a first channel identifier and a first position identifier, where the first channel identifier indicates the first data channel, the first position identifier indicates a first layout position, and the first mapping relationship is for determining a layout position of the first electronic device. The transceiver module is configured to send the first mapping relationship to the first electronic device.

With reference to the fourth aspect, in some implementations of the fourth aspect, before sending the first mapping relationship to the first electronic device, the transceiver module is further configured to receive a first device identifier sent by the first electronic device, where the first device identifier indicates the first electronic device, and the processing module is further configured to save a second mapping relationship between the first channel identifier and the first device identifier, where the second mapping relationship is for determining the layout position of the first electronic device.

With reference to the fourth aspect, in some implementations of the fourth aspect, the processing module is further configured to establish a connection to a second electronic device through a second data channel; the transceiver module is further configured to send the first mapping relationship and the second mapping relationship to the second electronic device; and the transceiver module is further configured to send a third mapping relationship between a second channel identifier and a second position identifier and a fourth mapping relationship between the second channel identifier and a second device identifier to the first electronic device, where the second channel identifier indicates the second data channel, the second device identifier indicates the second electronic device, and the second position identifier indicates a second layout position.

With reference to the fourth aspect, in some implementations of the fourth aspect, the processing module is further configured to detect whether the second electronic device is connected to the communication apparatus; and when the communication apparatus is disconnected from the second electronic device and the communication apparatus is connected to the first electronic device, the transceiver module is further configured to send a first message to the first electronic device, where the first message indicates that the second electronic device is disconnected.

With reference to the fourth aspect, in some implementations of the fourth aspect, if the communication apparatus is disconnected from the second electronic device and then reconnected, the transceiver module is further configured to send the first mapping relationship, the second mapping relationship, the third mapping relationship, and the fourth mapping relationship to the first electronic device; and the transceiver module is further configured to send a third message to the first electronic device, where the third message indicates that the second electronic device is reconnected.

With reference to the fourth aspect, in some implementations of the fourth aspect, the transceiver module is further configured to receive a changed first mapping relationship and a changed third mapping relationship that are sent by the first electronic device; and the transceiver module is further configured to send the changed first mapping relationship and the changed third mapping relationship to the second electronic device.

With reference to the fourth aspect, in some implementations of the fourth aspect, the processing module is further configured to save the changed first mapping relationship and the changed third mapping relationship.

According to a fifth aspect, a communication apparatus is provided, including a processing module and a transceiver module. The processing module is configured to establish a connection to a mouse through a first data channel. The transceiver module is configured to receive a first mapping relationship that is between a first channel identifier and a first position identifier and that is sent by the mouse, where the first channel identifier indicates the first data channel, the first position identifier indicates a first layout position, and the first mapping relationship is for determining a layout position of a first electronic device.

With reference to the fifth aspect, in some implementations of the fifth aspect, if the mouse is also connected to a second electronic device, the processing module is further configured to display prompt information based on the layout position of the first electronic device, where the prompt information indicates to traverse from the first electronic device to a traversal area of the second electronic device.

With reference to the fifth aspect, in some implementations of the fifth aspect, the processing module is further configured to detect a first trigger event, where the first trigger event is that the communication apparatus establishes the connection to the mouse; and the transceiver module is further configured to send a first device identifier to the mouse in response to the first trigger event, where the first device identifier indicates the first electronic device.

In a possible implementation, the processing module is further configured to detect a second trigger event, where the second trigger event is changing the first mapping relationship; and in response to the second trigger event, the transceiver module is further configured to send the changed first mapping relationship to the mouse.

According to a sixth aspect, a mouse is provided, including a processor. The processor is configured to establish a connection to a first electronic device through a first data channel. The processor is further configured to store a first mapping relationship between a first channel identifier and a first position identifier, where the first channel identifier indicates the first data channel, the first position identifier indicates a first layout position, and the first mapping relationship is for determining a layout position of the first electronic device. The processor is configured to send the first mapping relationship to the first electronic device.

With reference to the sixth aspect, in some implementations of the sixth aspect, the processor is further configured to receive a first device identifier sent by the first electronic device, where the first device identifier indicates the first electronic device, and the processor is further configured to save a second mapping relationship between the first channel identifier and the first device identifier, where the second mapping relationship is for determining the layout position of the first electronic device.

With reference to the sixth aspect, in some implementations of the sixth aspect, the processor is further configured to establish a connection to a second electronic device through a second data channel; the processor is further configured to send the first mapping relationship and the second mapping relationship to the second electronic device; and the processor is further configured to send a third mapping relationship between a second channel identifier and a second position identifier and a fourth mapping relationship between the second channel identifier and a second device identifier to the first electronic device, where the second channel identifier indicates the second data channel, the second device identifier indicates the second electronic device, and the second position identifier indicates a second layout position.

With reference to the sixth aspect, in some implementations of the sixth aspect, the processor is further configured to detect whether the second electronic device is connected to the mouse; and if the mouse is disconnected from the second electronic device and the mouse is connected to the first electronic device, the processor is further configured to send a first message to the first electronic device, where the first message indicates that the second electronic device is disconnected.

With reference to the sixth aspect, in some implementations of the sixth aspect, if the mouse is disconnected from the second electronic device and then reconnected, the processor is further configured to send the first mapping relationship, the second mapping relationship, the third mapping relationship, and the fourth mapping relationship to the second electronic device; and the processor is further configured to send a third message to the first electronic device, where the third message indicates that the second electronic device is reconnected.

With reference to the sixth aspect, in some implementations of the sixth aspect, the processor is further configured to receive a changed first mapping relationship and a changed third mapping relationship that are sent by the first electronic device; and the processor is further configured to send the changed first mapping relationship and the changed third mapping relationship to the second electronic device.

With reference to the sixth aspect, in some implementations of the sixth aspect, the processor is further configured to save the changed first mapping relationship and the changed third mapping relationship.

According to a seventh aspect, a communication apparatus is provided, including a processor. The processor is further configured to establish a connection to a mouse through a first data channel. The processor is configured to receive a first mapping relationship that is between a first channel identifier and a first position identifier and that is sent by the mouse, where the first channel identifier indicates the first data channel, the first position identifier indicates a first layout position, and the first mapping relationship is for determining a layout position of a first electronic device.

With reference to the seventh aspect, in some implementations of the seventh aspect, if the mouse is also connected to a second electronic device, the processor is further configured to display prompt information based on the layout position of the first electronic device, where the prompt information indicates to traverse from the first electronic device to a traversal area of the second electronic device.

With reference to the seventh aspect, in some implementations of the seventh aspect, the processor is further configured to detect a first trigger event, where the first trigger event is that the communication apparatus establishes the connection to the mouse; and the processor is further configured to send a first device identifier to the mouse in response to the first trigger event, where the first device identifier indicates the first electronic device.

In a possible implementation, the processor is further configured to detect a second trigger event, where the second trigger event is changing the first mapping relationship; and in response to the second trigger event, the processor is further configured to send the changed first mapping relationship to the mouse.

According to an eighth aspect, a computer program product is provided. The computer program product includes computer program code. When the computer program code is run on a computer, the method in the first aspect or any possible implementation of the first aspect is performed.

According to a ninth aspect, a computer program product is provided. The computer program product includes computer program code. When the computer program code is run on a computer, the method in the second aspect or any possible implementation of the second aspect is performed.

According to a tenth aspect, a computer-readable storage medium is provided. The computer-readable storage medium stores computer instructions. When the computer instructions are run on a computer, the method in the first aspect or any possible implementation of the first aspect is performed.

According to an eleventh aspect, a computer-readable storage medium is provided. The computer-readable storage medium stores computer instructions. When the computer instructions are run on a computer, the method in the second aspect or any possible implementation of the second aspect is performed.

According to a twelfth aspect, a chip is provided, including a processor, configured to read instructions stored in a memory. When the processor executes the instructions, the chip is enabled to perform the method in the first aspect or any possible implementation of the first aspect.

According to a thirteenth aspect, a chip is provided, including a processor, configured to read instructions stored in a memory. When the processor executes the instructions, the chip is enabled to perform the method in the second aspect or any possible implementation of the second aspect.

### BRIEF DESCRIPTION OF DRAWINGS

FIG. 1 is a schematic of a hardware architecture of an electronic device applicable to an embodiment of this application;
FIG. 2 is a schematic of a software architecture of an electronic device applicable to an embodiment of this application;
FIG. 3 is a schematic of a structure of a mouse according to an embodiment of this application;
FIG. 4 is a schematic of a hardware architecture of a mouse according to an embodiment of this application;
FIG. 5 is a schematic of a layout position according to an embodiment of this application;
FIG. 6 is a schematic of a communication method according to an embodiment of this application;
FIG. 7 is a schematic of another communication method according to an embodiment of this application;
FIG. 8 is a schematic of still another communication method according to an embodiment of this application;
FIG. 9 is a schematic of still another communication method according to an embodiment of this application;
FIG. 10 is a schematic of still another communication method according to an embodiment of this application;
FIG. 11 is a schematic of still another communication method according to an embodiment of this application;
FIG. 12 is a schematic of still another communication method according to an embodiment of this application;
FIG. 13 is a schematic of still another communication method according to an embodiment of this application;
FIG. 14 is a schematic of still another communication method according to an embodiment of this application;
FIG. 15 is a schematic of still another communication method according to an embodiment of this application;
FIG. 16 is a schematic of still another communication method according to an embodiment of this application;
FIG. 17 is a schematic of still another communication method according to an embodiment of this application;
FIG. 18 is a schematic of still another communication method according to an embodiment of this application;
FIG. 19 is a schematic of still another communication method according to an embodiment of this application;
FIG. 20 is a schematic of still another communication method according to an embodiment of this application;
FIG. 21 is a schematic of still another communication method according to an embodiment of this application;
FIG. 22 shows a communication apparatus according to an embodiment of this application; and
FIG. 23 shows an electronic device according to an embodiment of this application.

### DESCRIPTION OF EMBODIMENTS

The following describes technical solutions of this application with reference to the accompanying drawings.

Terms used in the following embodiments are merely intended to describe particular embodiments, but are not intended to limit this application. As used in the specification and the appended claims of this application, the singular expressions "a/an", "one", "said", "the above", "the" and "this" are intended to also include such expressions as "one or more", unless otherwise clearly indicated in the context. It should be further understood that in the following embodiments of this application, "at least one" and "one or more" refer to one, two, or more. The term "and/or" is for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

Reference to "one embodiment" or "some embodiments" described in this specification means that a specific characteristic, structure or feature described in combination with this embodiment is included in one or more embodiments of this application. Therefore, statements "in one embodiment" , "in some embodiments" , "in some other embodiments" , "in other embodiments", and the like in the differences in this specification do not necessarily refer to the same embodiment, but mean "one or more but not all embodiments", unless otherwise specially emphasized in other ways. Terms "include", "comprise", "have", and variations thereof all mean "including but not limited to", unless otherwise specified.

A method provided in embodiments of this application may be applied to an electronic device such as a mobile phone, a tablet computer, a wearable device, an in-vehicle device, an augmented reality (augmented reality, AR) device/a virtual reality (virtual reality, VR) device, a laptop computer, an ultra-mobile personal computer (ultra-mobile personal computer, UMPC), a netbook, or a personal digital assistant (personal digital assistant, PDA). A specific type of the electronic device is not limited in embodiments of this application.

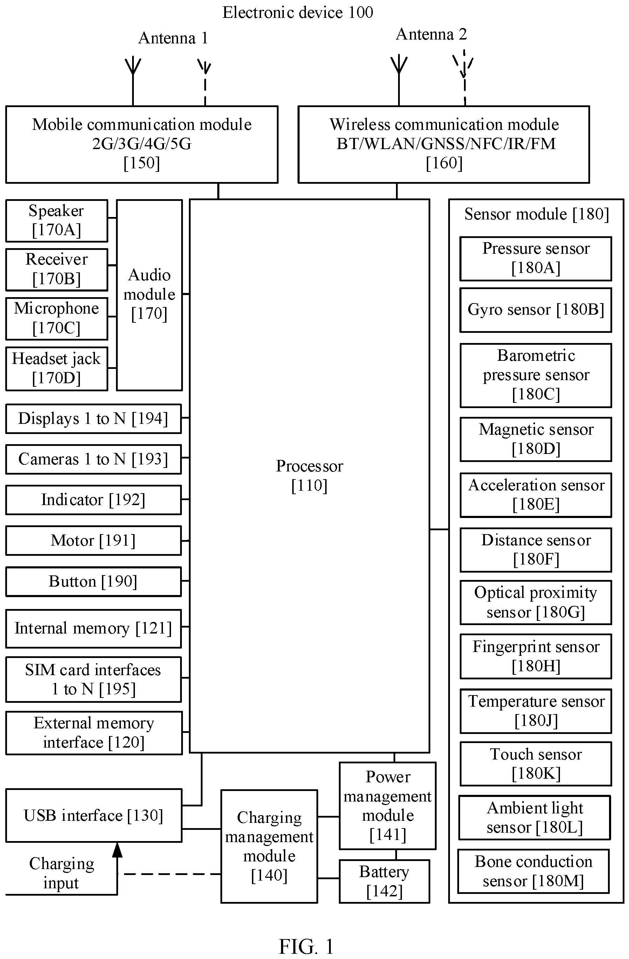

For example, FIG. 1 is a schematic of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory, thereby avoiding repeated access, reducing waiting time of the processor 110, and improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured through software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type C interface, or the like. The USB interface 130 may be configured to connect to the charger to charge the electronic device 100, or may be configured to transmit data between the electronic device 100 and a peripheral device, or may be configured to connect to a headset for playing an audio through the headset. The interface may be configured to connect to another electronic device like an AR device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long-term evolution (long-term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to a DSP for processing. The DSP converts the digital image signal into a standard image signal of a format such as RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform on frequency energy.

The video codec is configured to: compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 performs various functional applications and data processing of the electronic device 100 by running the instructions stored in the internal memory 121. The internal memory 121 may include a program storage area and a data storage area. The program storage area may store an operating system, an application required by at least one function (for example, a sound playing function, an image playing function, or the like), and the like. The data storage area may store data (for example, audio data, an address book, or the like) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be configured to listen to music or answer a hands-free call through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. The electronic device 100 may be provided with at least one microphone 170C. In some other embodiments, two microphones 170C may be disposed in the electronic device 100, to acquire sound signals and further implement a noise reduction function. In some other embodiments, three, four, or more microphones 170C may alternatively be disposed in the electronic device 100, to acquire a sound signal, implement noise reduction, and identify a sound source, to implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible to different types of SIM cards. The SIM card interface 195 is also compatible to an external storage card. The electronic device 100 interacts with a network through the SIM card, to implement functions such as conversation and data communication. In some embodiments, the electronic device 100 uses an embedded SIM (embedded-SIM, eSIM) card, that is, an embedded SIM card. The eSIM card may be embedded into the electronic device 100, and cannot be separated from the electronic device 100.

It should be understood that a calling card in embodiments of this application includes, but is not limited to, a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

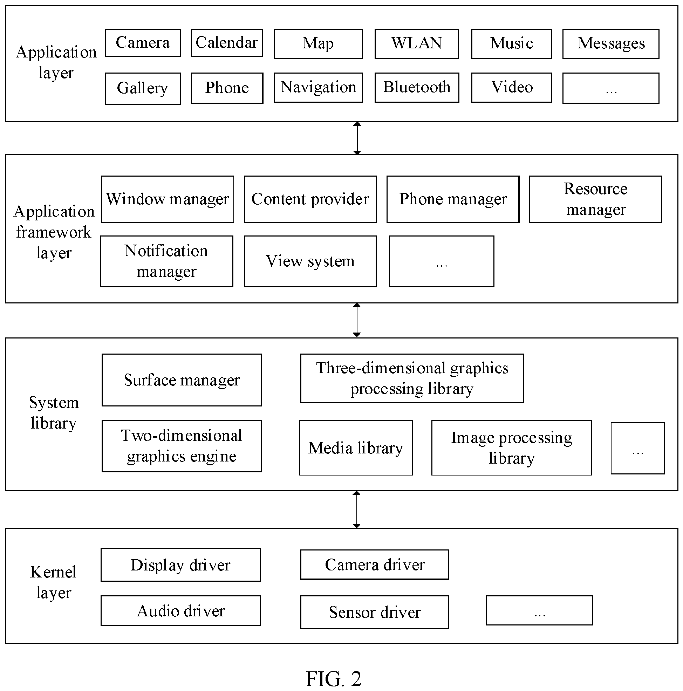

FIG. 2 is a block diagram of the software structure of the electronic device 100 in this embodiment of this application. Software is divided into several layers through the layered architecture, and each layer has a clear role and task. The layers communicate with each other through a software interface. In some embodiments, an Android system is divided into four layers from top to bottom: an application layer; an application framework layer; an Android runtime (Android runtime) and a system library; and a kernel layer. The application layer may include a series of application packages.

As shown in FIG. 2, an application package may include applications such as Camera, Gallery, Calendar, Calls, Maps, Navigation, WLAN, Bluetooth, Music, Videos, and Messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable these data to be accessible to an application. The data may include a video, an image, audio, calls that are made and received, a browsing history and a browsing bookmark, an address book, and the like.

The view system includes visual controls, such as a control for displaying text, a control for displaying pictures, and the like. The view system may be configured to build an application. A display interface may be formed by one or more views. For example, a display interface including an SMS message notification icon may include a view for displaying a text and a view for displaying a picture.

The telephony manager is configured to provide a communication function for the electronic device 100. For example, the communication function includes call status management (including call connection, hang-up, and the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively provide, on a status bar at the top of the system, a notification in a form of a chart or scroll bar text, for example, a notification of an application running in the background, or provide, on a screen, a notification in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and managing an Android system.

The core library includes two parts. One of the parts is a performance function that needs to be invoked in the Java language, and the other part is a core library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, such as MPEG4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in the embodiments of this application may be applied to systems such as Windows, Linux, MAC OS, Android, iOS, and HarmonyOS.

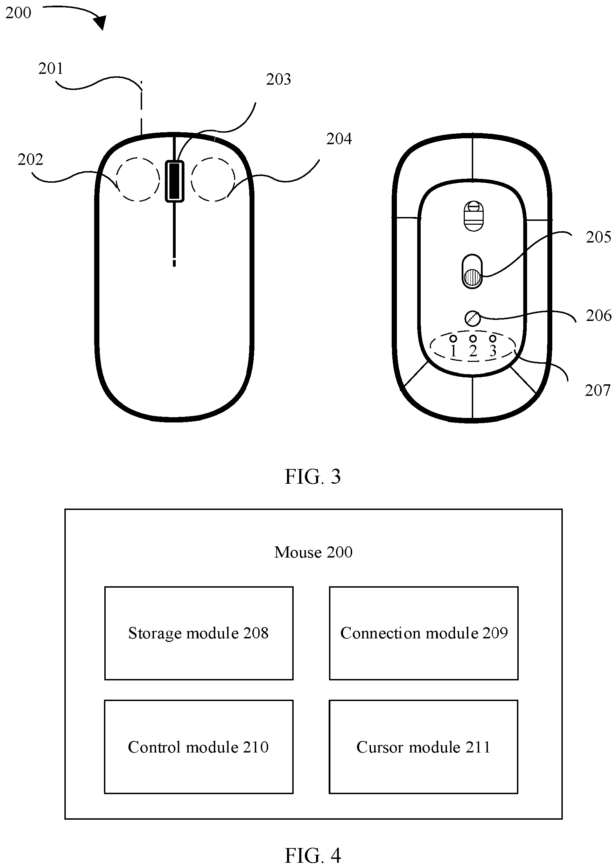

The foregoing describes, with reference to FIG. 1 and FIG. 2, a hardware architecture and a software architecture of the electronic device 100 provided in embodiments of this application. The following describes, with reference to FIG. 3 and FIG. 4, a mouse 200 applicable to embodiments of this application.

The mouse 200 provided in embodiments of this application may include a left button 202, a middle button 203, and a right button 204. The left button 202, the middle button 203, and the right button 204 may be clicked, double-clicked, or long pressed. The middle button 203 may include a scroll wheel, and the scroll wheel may rotate around a rotating shaft. When the mouse 200 is connected to the electronic device 100, the left button 202, the middle button 203, and the right button 204 may separately trigger the electronic device 100 to execute a corresponding event, or the electronic device 100 may be triggered to execute a corresponding event by using a combination of two or more of the left button 202, the middle button 203, and the right button 204. The mouse 200 may further include more buttons. For example, one or more other functional buttons are disposed on a side wall of the mouse 200.

The mouse 200 may further include a connection line 201. Through the connection line 201, the mouse 200 may establish a connection to the electronic device 100. The connection line 201 may be a wired connection, or may be a wireless connection, for example, a 2.4G radio frequency connection, a Bluetooth low energy connection, a common Bluetooth connection, or the like.

When the mouse 200 establishes a connection to the electronic device 100 in different connection manners, the mouse 200 may transmit data with the electronic device 100 by using different data transmission protocols.

For example, the mouse 200 may transmit data to the electronic device 100 by using one or more of the following protocols: a USB protocol, a Bluetooth protocol, a 2.4G private transmission protocol, and the like.

The mouse 200 may further include a power supply. The power supply may supply power to the mouse 200 through a battery, or may supply power to the mouse through the electronic device 100 after being connected to the electronic device 100 in a wired manner. When the mouse 200 is powered by a battery, the mouse 200 may further include a power switch 205, and the mouse 200 may be powered on or off by using the power switch 205.

When the mouse 200 may be connected to the electronic device by using the Bluetooth, the mouse 200 may further include a Bluetooth pairing button 206 and a Bluetooth pairing channel indication 207. When the Bluetooth pairing button 206 is turned on, the mouse 200 may be paired with and connected to the electronic device by using the Bluetooth. The Bluetooth pairing channel indication 207 may be configured to indicate a channel through which the mouse 200 is currently paired with the electronic device. For example, the Bluetooth pairing channel indication 207 may be an indicator.

The mouse 200 may further include one or more of the following functional modules.

In some embodiments, the mouse 200 may further include one or more storage modules 208. The one or more storage modules 208 may be configured to store a mapping relationship between a channel identifier of a data channel for establishing a connection between the mouse 200 and the electronic device and a position identifier of a layout position. The mapping relationship may be referred to as a first mapping relationship or referred to as layout information (or referred to as information of a layout position or layout position information). The one or more storage modules 208 may be further configured to store a mapping relationship between a channel identifier of a data channel established between the mouse 200 and the electronic device and device identifiers of different electronic devices. The mapping relationship may be referred to as a second mapping relationship or referred to as host information. Alternatively, the storage module 208 may further store an association relationship between a channel identifier, a position identifier, and a device identifier. The association relationship may be an association relationship (a first mapping relationship) between a channel identifier and a position identifier, or the association relationship may be an association relationship (a second mapping relationship) between a channel identifier and a device identifier, or the association relationship may be a mapping relationship between a position identifier and a device identifier, or the association relationship may be a mapping relationship between a channel identifier, a position identifier, and a device identifier.

Specifically, the one or more storage modules 208 may be flash memories (flash memory).

In an embodiment, the first mapping relationship and the second mapping relationship may be stored in the storage module 208 as a storage record.

In some embodiments, the mouse 200 may further include a connection module 209. The connection module 209 may be a Bluetooth connection module. The mouse 200 may establish a connection to the electronic device through the connection module 209.

In some embodiments, the mouse 200 may further include a control module 210. The control module 210 may be one or more microcontroller units (microcontroller units, MCUs). The control module 210 may be configured to control the mouse 200 to perform operations such as connecting to the electronic device, sending and receiving data, and saving data.

In some embodiments, the mouse 200 may further include a cursor module 211. The cursor module 211 is configured to convert movement of the mouse 200 on a table into a change in a position of a cursor corresponding to the mouse on the electronic device.

When the mouse 200 establishes a connection to the electronic device, a data channel may be established between the mouse 200 and the electronic device. The mouse 200 may establish a connection to the electronic device 100 through any one of one or more data channels, and may exchange information with the electronic device 100 through the one or more data channels, for example, exchange the layout information and/or the host information.

A relationship between a data channel and a connection line is briefly described herein. The data channel may be understood as a channel for data transmission, and is a logical concept. The connection line is a connection line established between an actual mouse and an electronic device, and is a physical concept. A one-to-one correspondence may exist between the data channel and the connection line.

For ease of understanding of content of embodiments described below, meanings of some nouns that may be used in the following embodiments are further explained herein.

1. Layout position: The layout position is for indicating a data channel between a mouse and an electronic device or a logical position of an electronic device that establishes a connection to a mouse through a data channel. When the mouse establishes connections to a plurality of electronic devices through different data channels, a relationship between logical positions of different electronic devices may be determined based on a relationship between layout positions of different data channels or a relationship between layout positions corresponding to different electronic devices. According to the relationship between extracted logical positions, a user may determine how to switch from one electronic device to another electronic device, that is, "traverse" from one electronic device to a traversal area of another electronic device. The layout position may be indicated through a position identifier. For example, a layout position corresponding to a first data channel may be identified by using coordinates (1, 3), and a layout position corresponding to a second data channel may be identified by using coordinates (2, 3). The relationship between the layout positions of the two data channels may be determined with reference to information (the coordinates (1, 3) and the coordinates (2, 3)) of the layout positions corresponding to the two data channels. The position identifier of the layout position may be alternatively in another form, for example, P1, A1B2, or the like. This is not limited in embodiments of this application.

2. Relationship between layout positions: Position identifiers of layout positions of a plurality of data channels may be for determining a relationship between layout positions, or may be for determining a relationship between layout positions of electronic devices that establish connections to a mouse through the plurality of data channels.

3. Physical position: The physical position may be used to represent a spatial position of an electronic device, and physical positions of different electronic devices may be used to reflect a mutual relationship between spatial positions of different electronic devices. For example, a first electronic device is on a left side of a second electronic device, and a third electronic device is on a right side of the second electronic device. There may be a correspondence between layout positions of a plurality of electronic devices and physical positions of the plurality of electronic devices. For example, position identifiers of layout positions of the first electronic device, the second electronic device, and the third electronic device may be respectively (1, 1), (1, 2), and (1, 3), that is, the layout position of the first electronic device is located on a left side of the layout position of the second electronic device, and the layout position of the third electronic device is located on a right side of the layout position of the second electronic device. Alternatively, layout positions of a plurality of electronic devices may not correspond to physical positions of the plurality of electronic devices. For example, information of layout positions of the first electronic device, the second electronic device, and the third electronic device may be respectively (1, 1), (2, 1), and (3, 1), that is, the layout position of the first electronic device is located above the layout position of the second electronic device, and the layout position of the third electronic device is located below the layout position of the second electronic device. A change in a physical position relationship of an electronic device may cause a change in a layout position.

The following first describes a mapping relationship between a channel and a layout position. For ease of understanding, it is assumed that the mouse 200 actually uses three channels, and a grid of three rows and three columns is used as an example for description.

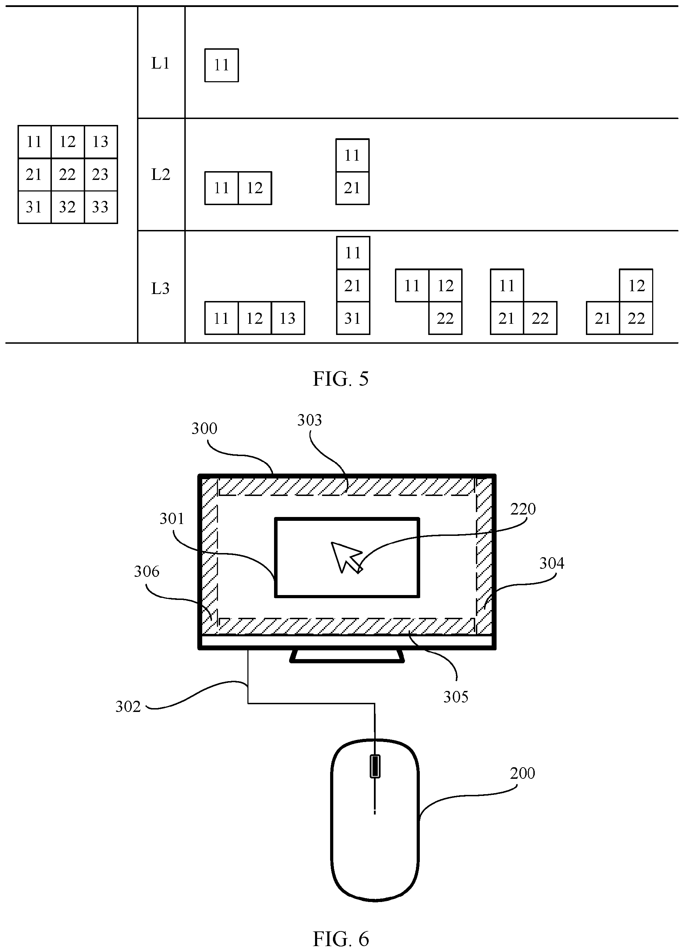

It should be understood that the mouse 200 may further support establishing connections to more electronic devices through more data channels. In this case, layout positions of a plurality of electronic devices connected to the mouse 200 are not limited to layout positions shown in FIG. 5, and may have more forms. For example, a relationship between layout positions of four electronic devices may be a position relationship between four squares in a "2x2 grid". For brevity, details are not described herein.

As shown in FIG. 5, for a grid layout of three rows and three columns, a layout position of a square in the first row and the first column may be identified by using a coordinate "11", a layout position of a square in the second row and the second column may be identified by using a coordinate "22", and the rest may be deduced by analogy. When the mouse 200 establishes a connection to only one electronic device, L1 represents a layout position of the electronic device. When the mouse 200 establishes connections to two electronic devices, L2 represents possible layout positions of the two electronic devices. When the mouse 200 establishes connections to three electronic devices, L3 represents possible layout positions of the three electronic devices.

The mapping relationship between the channel identifier of the data channel in the mouse 200 and the position identifier of the layout position may be understood as layout information of the mouse 200. The layout information may be configured in a storage unit 205 of the mouse 200 when the mouse 200 is delivered from a factory. Alternatively, the layout information may be changed by a user of the mouse 200 during actual use, and the changed layout information may also be stored in a storage unit 205 of the mouse 200.

For example, when the mouse 200 is delivered from a factory, layout information shown in Table 1 may be configured in the storage unit, that is, a layout position corresponding to a channel 1 is identified by 11, a layout position corresponding to a channel 2 is identified by 12, and a layout position corresponding to a channel 3 is identified by 13. For the layout positions of the channel 1, the channel 2, and the channel 3, the layout position of the channel 1 is on a left side of the layout position of the channel 2, and the layout position of the channel 3 is on a right side of the layout position of the channel 2.

If the layout positions corresponding to the data channels when the mouse 200 is delivered from a factory is identified in the foregoing manner, when a first electronic device 300 exchanges information with the mouse 200 through the channel 1, a second electronic device 400 exchanges information with the mouse 200 through the channel 2, and a third electronic device 500 exchanges information with the mouse 200 through the channel 3, a layout position of the first electronic device 300 is located on a left side of a layout position of the second electronic device 400, and a layout position of the third electronic device 500 is located on a right side of the layout position of the second electronic device 400.

The user may change a relationship among the layout positions of the foregoing three electronic devices. For example, the layout position of the first electronic device 300 is changed to 22, and the layout position of the third electronic device 500 is changed to 32. After the changes, the layout position of the second electronic device 400 is located above the layout position of the first electronic device 300, and the layout position of the third electronic device 500 is located below the layout position of the first electronic device 300.

It should be noted that the layout positions may be identified in another manner, for example, A1, A2, and A3, provided that identifiers of the layout positions can be parsed by a mouse and/or an electronic device. For ease of understanding, the following uses only an identification manner in Table 1 for description.

**Table 1**

| | | | | |
|---|---|---|---|---|
| Channel | 1 | 2 | 3 | ... |
| Layout position | 11 | 12 | 13 | ... |

FIG. 6 is a schematic of a communication method according to an embodiment of this application.

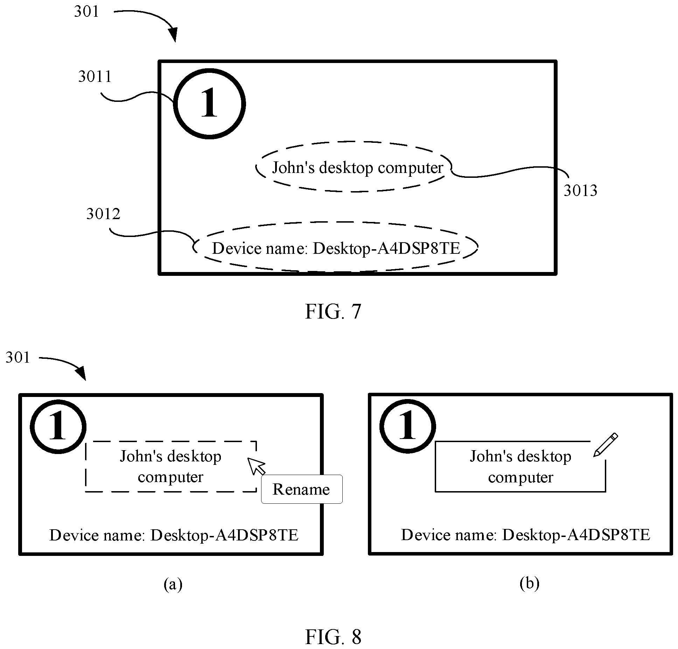

With reference to FIG. 7, FIG. 8, and FIG. 9, when the first electronic device 300 establishes a connection to the mouse 200 through a connection line 302, the first electronic device 300 may display a cursor 220 corresponding to the mouse 200, and by using the cursor 220, the mouse 200 may implement other operations such as selection, opening, closing, and the like on a file on the first electronic device 300.

The first electronic device 300 may further display a window 301, and the window 301 may include device identifier information of the first electronic device 300. The device identifier information may include first identifier information 3013 and second identifier information 3012. The first identifier information 3013 may be information entered by a user, and the second identifier information 3012 may be a device name of the first electronic device 300, or the second identifier information 3012 may be information that can identify the first electronic device 300 and that is determined by hardware and/or software of the electronic device 100, for example, a network address of the electronic device 100.

The window 301 may further include a channel identifier 3011, and the channel identifier 3011 indicates a channel through which the first electronic device 300 is currently associated with the mouse 200.

In some embodiments, when the user of the electronic device 100 selects (for example, right-clicks, left-clicks, left-double-clicks, or the like) the first identifier information 3013 by using the mouse 200, the electronic device 100 displays prompt information in response to the operation of the user. The prompt information is for prompting the user that the first identifier information 3013 can be renamed.

In some other embodiments, when the user of the electronic device 100 clicks (for example, clicks, double-clicks, or long presses) a display area in which the first identifier information 3013 is located, the electronic device 100 displays prompt information in response to the operation of the user. The prompt information is for prompting the user that the first identifier information 3013 can be renamed.

The first electronic device 300 may further display a first area 303, a second area 304, a third area 305, and a fourth area 306. The first area 303, the second area 304, the third area 305, and the fourth area 306 may be hidden by default. When the cursor 220 corresponding to the mouse 200 is located in one or more of the foregoing areas, the electronic device 100 may display the corresponding area. When the cursor 220 moves from a position outside the foregoing four areas and passes through a boundary on one side of an area toward a boundary on another side of the area, in response to a movement event of the mouse, the first electronic device 300 determines that the mouse 200 triggers a traversal event, that is, the mouse 200 switches from a state of controlling the first electronic device 300 to a state of controlling another electronic device (for example, the second electronic device 400).

For example, the cursor 220 moves from a left side of the second area 304 into the second area 304 and further moves to a boundary on a right side of the second area 304. The electronic device 100 may detect a movement event of the cursor, and make a corresponding response based on the layout information and the host information.

It should be noted that the first area 303, the second area 304, the third area 305, and the fourth area 306 may all be referred to as traversal areas. In actual use, a specific area of the four areas that is specifically used to implement traversal may be defined by a user, or may be set to a default value when the electronic device is delivered from a factory. For example, for two electronic devices with a layout position relationship being adjacent on the left and right, a traversal area of the two electronic devices may be set to an area near a left border and an area near a right border by default before the electronic devices are delivered, or the user may change the traversal area to an area near an upper border or a lower border. Alternatively, before the user triggers a traversal event, the electronic device may prompt the user to select one or more traversal areas for triggering the traversal event.

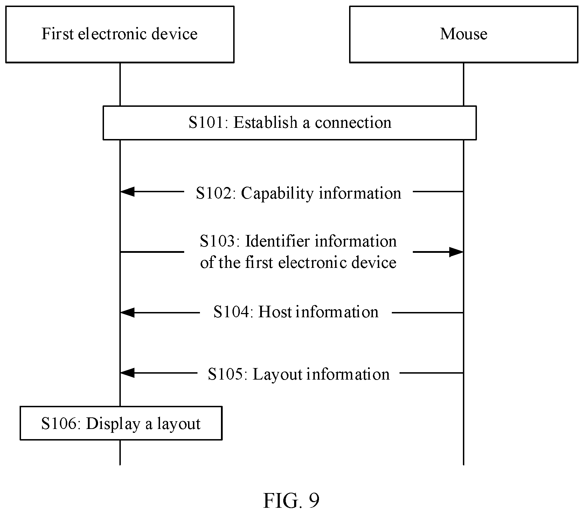

The following describes a communication process between the mouse 200 and the first electronic device 300 with reference to FIG. 9.

S101: The mouse 200 establishes a connection to the first electronic device 300.

Specifically, the mouse 200 may establish a connection to the first electronic device 300 in one or more of the following manners: a wired connection, a Bluetooth connection, a radio frequency connection, and the like.

S102: Optionally, the mouse 200 sends capability information of the mouse 200 to the first electronic device 300.

When the mouse 200 may send layout information to an electronic device, the mouse 200 may send first capability information to the first electronic device 300. The first capability information indicates that the mouse 200 supports sending of layout information to an electronic device.

In some embodiments, the first capability information may further indicate that the mouse 200 has a traversal function.

When the mouse 200 does not support sending of layout information to an electronic device, the mouse 200 may send second capability information to the first electronic device 300. The second capability information indicates that the mouse 200 does not support sending of layout information to an electronic device. Alternatively, when the mouse 200 does not support sending of layout information to an electronic device, the mouse 200 may not send the second capability information to the first electronic device 300. In this way, if the first electronic device 300 does not receive the capability information of the mouse 200 within a preset time range, the electronic device 300 may determine that the mouse 200 does not support sending of layout information to an electronic device.

It should be noted that, when the mouse 200 does not support sending of layout information to an electronic device, the following steps may not be performed again.

S103: The first electronic device 300 sends a device identifier of the first electronic device 300 to the mouse 200.

When the first electronic device 300 determines that the mouse 200 supports sending of layout information to an electronic device, the first electronic device 300 sends the device identifier of the first electronic device 300 to the mouse 200.

The device identifier may include first identifier information 3013 and/or second identifier information 3012. The first identifier information 3013 may be information entered by a user, and the second identifier information 3012 may be a device name of the first electronic device 300, or the second identifier information 3012 may be information that can identify the first electronic device 300 and that is determined by hardware and/or software of the first electronic device 300, for example, a network address of the first electronic device 300.

S104: The mouse 200 sends host information to the first electronic device 300.

The host information indicates a mapping relationship between the device identifier of the first electronic device 300 and a channel identifier of a data channel for establishing a connection to the mouse 200.

For example, when the first electronic device 300 exchanges information with the mouse 200 through a channel 1 of the mouse 200, the host information may be represented as a mapping relationship between a channel identifier of the channel 1 and the device identifier of the first electronic device 300. The host information is, for example, channel 1:Desktop-A4DSP8TE.

S105: The mouse 200 sends layout information to the first electronic device 300.

The layout information indicates a mapping relationship between a channel identifier of one or more channels for establishing connections between the mouse 200 and a plurality of electronic devices and a position identifier of one or more layout positions.

The layout information is, for example, channel 1:11.

Similarly, the layout information is, for example, (channel 1:11; channel 2:12).

In some embodiments, the layout information indicates a mapping relationship between a channel identifier of a data channel for establishing a connection to the first electronic device 300 and a position identifier of a layout position.

It should be noted that the mouse 200 may simultaneously send the host information and the layout information to the first electronic device 300. That is, S104 and S105 may be completed in one information sending event.

It should be further noted that the host information and the layout information may be used as one piece of information, that is, an association relationship between a channel identifier, a position identifier, and a device identifier. The information is, for example, channel 1:Desktop-A4DSP8TE:11. The information includes the mapping relationship between the channel identifier of the channel 1 and the device identifier of the first electronic device 300 and also includes the mapping relationship between the channel identifier 1 of the channel and the position identifier of the layout position.

S106: Optionally, the first electronic device 300 displays a layout.

The first electronic device 300 displays a layout position of the first electronic device 300 based on the obtained layout information and host information.

For example, when the mouse 200 establishes a connection to only the first electronic device 300, the first electronic device 300 may display a corresponding layout in the window 301 shown in FIG. 6.

Similarly, for example, when the mouse 200 establishes connections to both the first electronic device 300 and the second electronic device 400, the first electronic device 300 or the second electronic device 400 may display a window 301 and a window 401 and a position relationship between the window 301 and the window 401 that are shown in FIG. 9.

Alternatively, in some embodiments, when the mouse 200 establishes connections to both the first electronic device 300 and the second electronic device 400, the first electronic device 300 or the second electronic device 400 may display a first identifier control and a second identifier control. The first identifier control indicates the first electronic device 300, the second identifier control indicates the second electronic device 400, the first identifier control is located at a layout position corresponding to the first electronic device 300, and the second identifier control is located at a layout position corresponding to the second electronic device 400.

The following uses only an example in which the window 301 identifies the first electronic device and the window 401 identifies the second electronic device for description. It should be understood that this example does not constitute a limitation on this application.

It should be noted that a sequence of performing the steps in the foregoing embodiments is not limited in this application. For example, S104 may be performed before S105, or may be performed after S105.

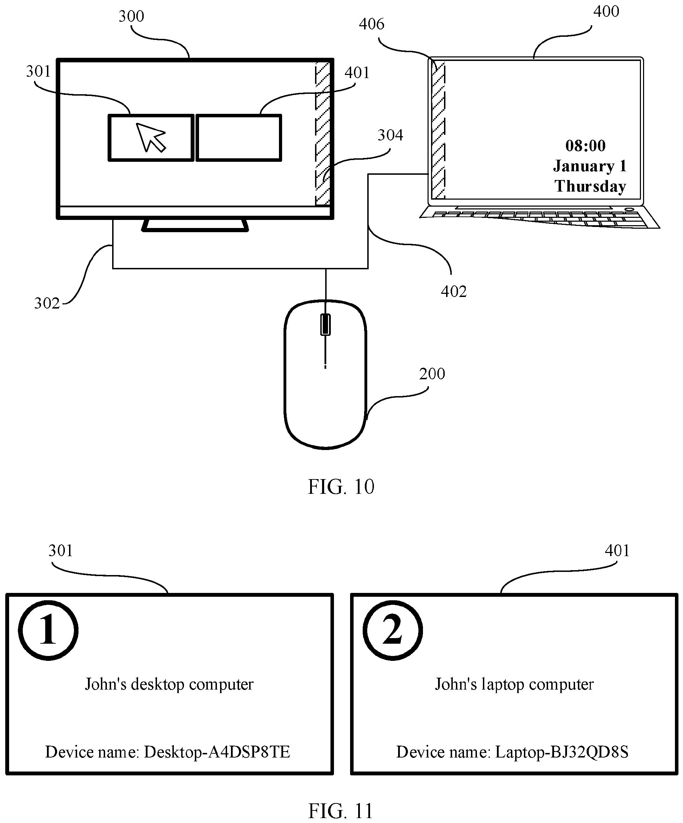

With reference to FIG. 10 to FIG. 12, the following describes another communication method provided in an embodiment of this application.

When the first electronic device 300 establishes a connection to the mouse through the connection line 302 and the mouse 200 supports sending of layout information to an electronic device, the second electronic device 400 simultaneously establishes a connection to the mouse 200 through a connection line 402. The second electronic device 400 may be an electronic device of a same type as the first electronic device 300, or the second electronic device 400 may be an electronic device of a different type from the first electronic device 300. The connection line 402 may be a wired connection and/or a wireless connection.

As shown in FIG. 10, the first electronic device 300 may display a window 301 and a window 401. The window 301 indicates a layout position of the first electronic device 300, and the window 401 indicates a layout position of the second electronic device 400. The window 301 and the window 401 form a horizontal layout in L2 shown in FIG. 4. That is, the first electronic device 300 and the second electronic device 400 are horizontally arranged, and the first electronic device 300 is located on a left side of the second electronic device 400.

Specifically, the window 301 may display first identifier information "John's desktop computer" of the first electronic device 300, the window 301 may further display second identifier information "Device name: Desktop-A4DSP8TE" of the first electronic device 300, and the window 301 may further display a channel sequence number corresponding to the first electronic device 300.

The window 401 may display first identifier information "John's laptop computer" of the second electronic device 400, the window 401 may further display second identifier information "Device name: Laptop-BJ32QD8S" of the second electronic device 400, and the window 401 may further display a channel sequence number corresponding to the second electronic device 400.

When a user of an electronic device moves a cursor corresponding to the mouse 200 from an outside of a second area 304 of the first electronic device 300 into the second area 304 and continues to move to a right side of the second area 304 (that is, a right border of the first electronic device 300), in response to the operation of the user, the first electronic device 300 determines that a cursor 220 triggers a traversal event, and sends, to the mouse 200, a message that the traversal event occurs. After acquiring the message that the traversal event occurs, the mouse 200 displays the cursor 220 on a traversal area 406 of the second terminal device 400. Further, the user may control the second electronic device 400 through the mouse 200. For example, the user may perform operations such as selection, opening, closing, and the like on a file on the second electronic device 400 through the cursor 220.

When the cursor 220 moves to a display area of the second electronic device 400, the second electronic device 400 may display the window 301 and the window 401 shown in FIG. 11. Display content of the window 301 and display content of the window 401 are similar to the display content of the window 301 and the display content of the window 401 that are of the cursor 220 and that are in a display area of the first electronic device 300 in the foregoing description. For details, refer to the foregoing description. Details are not described herein again.

Alternatively, in response to an operation of requesting a display layout by the user of the electronic device, the second electronic device 400 displays a window 301 and a window 401 that are shown in FIG. 11.

In some embodiments, when the electronic device detects a cursor-triggered traversal event, the electronic device displays, in response to the event, a layout of a plurality of electronic devices shown in FIG. 10.

Similar to that the cursor 220 triggers a traversal event on the first electronic device 300, the cursor 220 may traverse to the second area 304 of the first electronic device 300 through a traversal area of the second electronic device 400, to implement control of the first electronic device 300 by the mouse 200. Alternatively, when the mouse 200 is connected to more electronic devices, the cursor 220 may traverse to a display area of another electronic device through a traversal area, to implement control on the another electronic device.

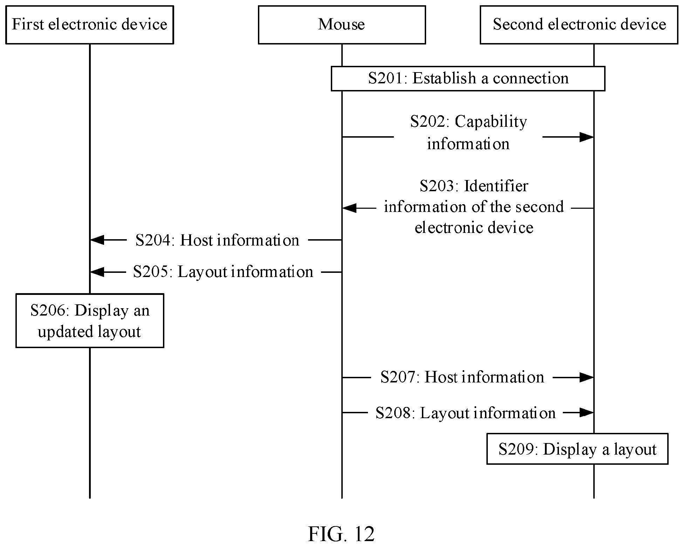

The following describes in detail a communication method between the mouse 200 and the second electronic device 400 with reference to FIG. 12.

S201: The mouse 200 establishes a connection to the second electronic device 400.

Specifically, the mouse 200 may establish a connection to the first electronic device 300 in one or more of the following manners: a wired connection, a Bluetooth connection, a radio frequency connection, and the like.

S202: The mouse 200 sends capability information of the mouse 200 to the second electronic device 400.

When the mouse 200 may send layout information to an electronic device, the mouse 200 may send first capability information to the first electronic device 300. The first capability information indicates that the mouse 200 supports sending of layout information to an electronic device.

In some embodiments, the first capability information further indicates that the mouse 200 supports a "traversal" function.

S203: The second electronic device 400 sends identifier information of the second electronic device 400 to the mouse 200.

When the second electronic device 400 determines that the mouse 200 supports sending of layout information to an electronic device, the second electronic device 400 sends the identifier information of the second electronic device 300 to the mouse 200.

The identifier information may include first identifier information 4013 and/or second identifier information 4012. The first identifier information 4013 may be information entered by a user, and the second identifier information 4012 may be a device name of the second electronic device 400, or the second identifier information 4012 may be information that can identify the second electronic device 400 and that is determined by hardware and/or software of the second electronic device 400, for example, a network address of the second electronic device 400.

S204: The mouse 200 sends, to the first electronic device 300, host information obtained after the second electronic device 400 is connected.

The host information includes a mapping relationship between the first electronic device 300 and a channel for exchanging information on the mouse 200 and a mapping relationship between the second electronic device 400 and a channel for exchanging information on the mouse 200.

For example, when the first electronic device 300 exchanges information with the mouse 200 through a channel 1 of the mouse 200 and the second electronic device 400 exchanges information with the mouse 200 through a channel 2 of the mouse 200, the host information may be represented as a mapping relationship between the channel 1 and identifier information of the first electronic device 300 and a mapping relationship between the channel 2 and the identifier information of the second electronic device 400. For example, the host information is (channel 1:Desktop-A4DSP8TE; channel 2:Laptop-BJ32QD8S).

S205: The mouse 200 sends, to the first electronic device 300, layout information obtained after the second electronic device 400 is connected.

The layout information indicates a mapping relationship between one or more channels of the mouse 200 and one or more layout positions.

In some embodiments, the layout information indicates a mapping relationship between a channel corresponding to the first electronic device 300 and a layout position. The layout information is, for example, channel 1: 11.

In some other embodiments, the layout information includes a mapping relationship between a sequence number of a channel that has exchanged information with an electronic device currently of the channels of the mouse 200 and a layout position. The layout information is, for example, (channel 1:11; channel 2:12).

In some embodiments, the host information in S204 and the layout information in S205 may be sent to the first electronic device 300 together. That is, S204 and S205 may be combined into one step for execution. When S204 and S205 are combined into one step for execution, the host information and the layout information may be represented through one piece of information, that is, an association relationship between three types of information: a channel identifier, a position identifier, and a device identifier. The information is, for example, (channel 1:Desktop-A4DSP8TE:11; channel 2:Laptop-BJ32QD8S:12).

Alternatively, the host information and the layout information may be separately sent to the first electronic device 300.

S206: Optionally, the first electronic device 300 displays a layout obtained after the second electronic device 400 is connected.

When the second electronic device 400 establishes a connection to the mouse 200, the first electronic device 300 may display a layout after the second electronic device 400 is connected. Alternatively, the first electronic device 300 displays the layout in response to a request of the user for displaying a layout of a currently connected electronic device.

S207: The mouse sends, to the second electronic device 400, the host information obtained after the second electronic device 400 is connected.

The host information includes the mapping relationship between the first electronic device 300 and the channel for exchanging information on the mouse 200 and the mapping relationship between the second electronic device 400 and the channel for exchanging information on the mouse 200.

In some embodiments, the mapping relationship between the first electronic device 300 and the channel for exchanging information on the mouse 200 and the mapping relationship between the second electronic device 400 and the channel for exchanging information with the mouse 200 may be separately sent to the second electronic device 400, or may be sent to the second electronic device 400 together.

For example, when the first electronic device 300 exchanges information with the mouse 200 through the channel 1 of the mouse 200, and the second electronic device 400 exchanges information with the mouse 200 through the channel 2 of the mouse 200, the host information may be represented as the mapping relationship between the channel 1 and the identifier information of the first electronic device 300 and the mapping relationship between the channel 2 and the identifier information of the second electronic device 400. For example, the host information is (channel 1:Desktop-A4DSP8TE; channel 2:Laptop-BJ32QDSS).

S208: The mouse 200 sends, to the second electronic device 400, the layout information obtained after the second electronic device 400 is connected.

The layout information indicates the mapping relationship between the one or more channels of the mouse 200 and the one or more layout positions.

In some embodiments, the layout information indicates the mapping relationship between the channel corresponding to the first electronic device 300 and the layout position. The layout information is, for example, channel 1:11.

In some other embodiments, the layout information includes the mapping relationship between the sequence number of the channel that has exchanged information with the electronic device currently of the channels of the mouse 200 and the layout position. The layout information is, for example, (channel 1:11; channel 2:12).

In some embodiments, the host information in S207 and the layout information in S208 may be sent to the first electronic device 300 together, or may be separately sent to the second electronic device 400.

S209: Optionally, the second electronic device 400 displays a layout obtained after the second electronic device 400 is connected.

When the second electronic device 400 establishes a connection to the mouse 200, the second electronic device 400 may display a layout after the second electronic device 400 is connected. Alternatively, the second electronic device 400 displays the layout in response to the request of the user for displaying the layout of the currently connected electronic device.

It should be noted that an execution sequence of the steps in the foregoing embodiments is not limited in this application. An execution sequence of the processes should be determined based on functions and internal logic of the processes. For example, S204 may be performed before S205, or may be performed after S205, and S206 may be performed before S209, or may be performed after S209.

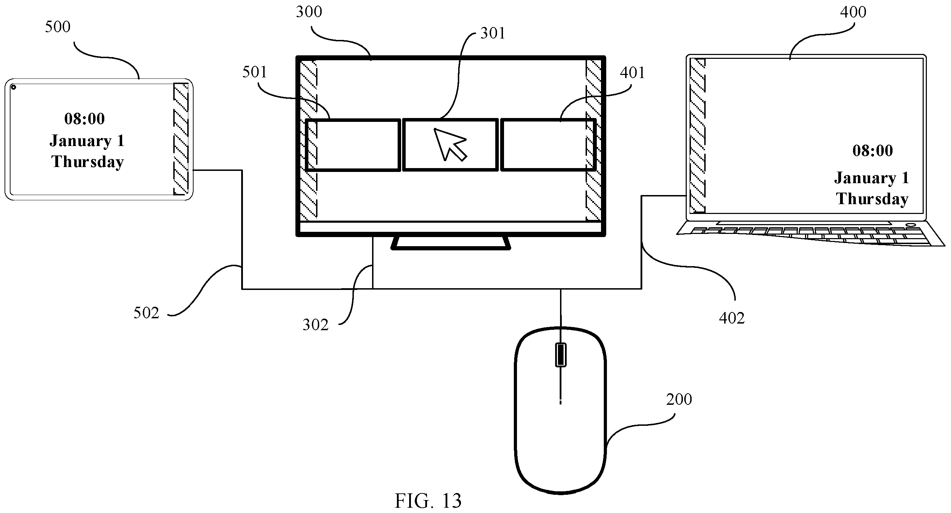

FIG. 13 shows a case that the mouse 200 establishes connections to the first electronic device 300, the second electronic device 400, and the third electronic device 500 at the same time. The third electronic device 500 exchanges information with the mouse 200 through the channel 1, the first electronic device 300 exchanges information with the mouse 200 through the channel 2, the second electronic device 400 exchanges information with the mouse 200 through a channel 3, the channel 1 corresponds to a layout position 11, the channel 2 corresponds to a layout position 12, and the channel 3 corresponds to a layout position 13. That is, an electronic device, a channel identifier, and a position identifier of a layout position have a mapping relationship shown in Table 2.

**Table 2**

| | | | | |
|---|---|---|---|---|
| Channel | 1 | 2 | 3 | ... |
| Layout position | 11 | 12 | 13 | ... |
| Electronic device | 400 | 300 | 500 | ... |

A communication method between the mouse 200 and the third electronic device 500 is similar to the communication method between the mouse 200 and the second electronic device 400 shown in FIG. 12. For details, refer to descriptions in the related embodiment in FIG. 12. For brevity, details are not described herein again.

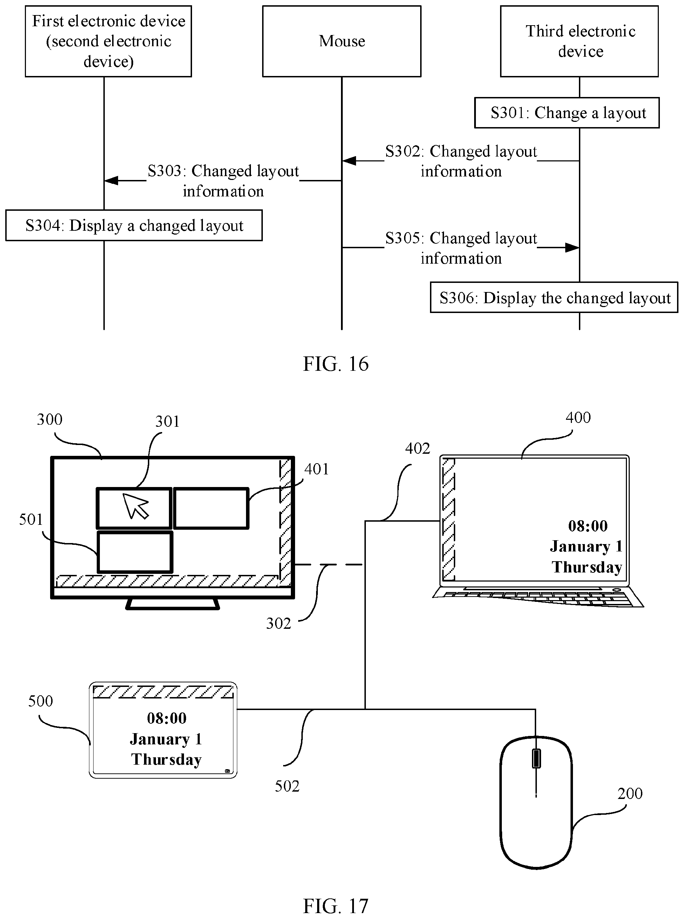

FIG. 16 shows still another communication method according to an embodiment of this application. In this embodiment of this application, a mapping relationship between an electronic device and a channel and a layout position of the mouse 200 is shown in Table 2. This embodiment of this application describes a process of switching layout positions of electronic devices.

The following uses an example in which the third electronic device 500 detects that an event of switching layout positions of the third electronic device 500 and the first electronic device 300 occurs for description. It should be understood that the first electronic device 300 or the second electronic device 400 may perform detection or another process performed by the third electronic device 500.

S301: The third electronic device 500 acquires information that a layout position of an electronic device is changed.

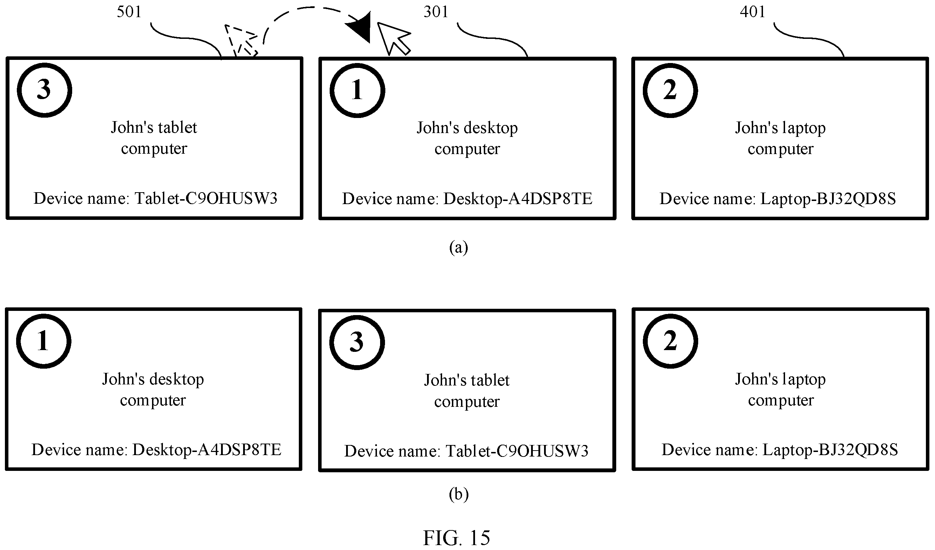

In some embodiments, a user of the electronic device selects, on a user interface shown in (a) in FIG. 15, to switch layout positions of the third electronic device 500 and the first electronic device 300, and in response to the operation of the user, the third electronic device 500 may perform the following S502 and subsequent operations.

In an embodiment, the user of the electronic device may drag a window 501 or a window 301 to switch positions of the two, to switch the layout positions of the third electronic device 500 and the first electronic device 300.

In some other embodiments, the third electronic device 500 may detect a physical position relationship among the first electronic device 300, the second electronic device 400, and the third electronic device 500. When it is detected that actual positions of the third electronic device 500 and the first electronic device 300 are inconsistent with a layout position relationship locally saved in the third electronic device 500, it is determined that the layout positions of the third electronic device 500 and the first electronic device 300 need to be updated, and the user of the electronic device is prompted to switch the layout positions of the third electronic device 500 and the first electronic device 300. In response to an operation of confirming the switching by the user, the third electronic device 500 triggers an event of switching layout positions of a channel 3 and a channel 1.

In an embodiment, the third electronic device 500 may determine a position relationship between electronic devices through a camera, an infrared sensor, or another sensor of the third electronic device 500, or the third electronic device 500 may determine a position relationship between electronic devices by invoking a sensor of the second electronic device 400 or the first electronic device 300.

S302: The third electronic device 500 sends changed layout information to the mouse 200.

The changed layout information indicates a mapping relationship between a channel identifier and a position identifier of a layout position after a layout is changed.

Layout switching of the third electronic device 500 and the first electronic device 300 is used as an example. Layout information before switching may be represented as (channel 3:11; channel 1:12; channel 2:13), and layout information after switching may be represented as (channel 1:11; channel 3:12; channel 2:13). Alternatively, the layout information after switching may reflect only a changed part, for example, may be represented as (channel 1:11; channel 3:12). A part of a relationship between a layout position and a channel that does not change may not be reflected in the layout information after switching.

Correspondingly, before the layout switching of the third electronic device 500 and the first electronic device 300, host information may be represented as (John's tablet computer: channel 3; John's desktop computer: channel 1; John's laptop computer: channel 2). After the layout switching, the host information does not change and may still be represented as (John's tablet computer: channel 3; John's desktop computer: channel 1; John's laptop computer: channel 2).

After the mouse 200 receives the changed layout information sent by the third electronic device, the changed layout information may be saved locally. That is, locally saved layout information before the change is updated to the changed layout information.

S303: The mouse 200 sends the changed layout information to the first electronic device 300 and the second electronic device 400.

After obtaining the updated layout information, the mouse 200 may send the updated layout information to the first electronic device 300 and the second electronic device 400.

Specifically, the mouse 200 may send the layout information (channel 1:11; channel 3:12; channel 2:13) to the first electronic device 300 and the second electronic device 400. Alternatively, the mouse 200 may send the layout information and the host information to the first electronic device 300 and the second electronic device 400 together, for example, (channel 1:11:John's desktop computer; channel 3:12:John's tablet computer; channel 2:13:John's laptop computer).

In some embodiments, the mouse 200 sends only the changed layout information to the first electronic device 300 and the second electronic device 400, for example, (channel 1:11; channel 3:12). Alternatively, the mouse 200 sends only the changed layout information and the corresponding host information to the first electronic device 300 and the second electronic device 400, for example, (channel 1:11:John's desktop computer; channel 3:12:John's tablet computer).

S304: Optionally, the first electronic device 300 and/or the second electronic device 400 display/displays a changed layout.

After receiving the changed layout information sent by the mouse 200, the first electronic device 300 and the second electronic device 400 may display the changed layout shown in (b) in FIG. 15.

In some embodiments, after receiving the changed layout information, the first electronic device 300 and the second electronic device 400 may further check the changed layout information, and determine whether the changed layout information is consistent with the layout information locally saved in the electronic device. When determining that the changed layout information is inconsistent with the locally saved layout information, the electronic device may display the changed layout.

S305: Optionally, the mouse 200 sends the changed layout information to the third electronic device 500.

A specific implementation process is similar to that of S303. For details, refer to S303.

S306: Optionally, the third electronic device 500 displays the changed layout.

A specific implementation process is similar to that of S304. For details, refer to S304.

In some embodiments, when S305 is not performed, the third electronic device 500 may display layout positions of a plurality of electronic devices based on the layout information changed by the user in S301.

It should be noted that an execution sequence of the steps in the foregoing embodiments is not limited in this application. An execution sequence of the processes should be determined based on functions and internal logic of the processes. For example, S304 may be performed before S305, or may be performed after S305, and S303 may be performed before S305, or may be performed after S305.

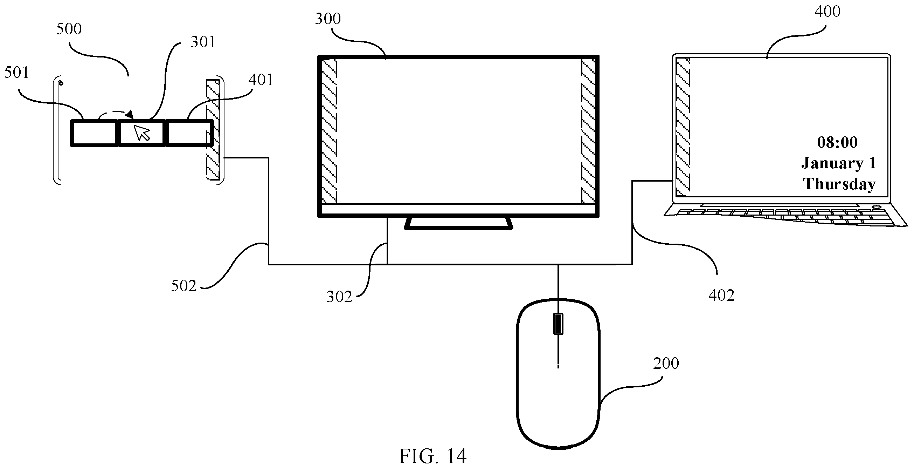

With reference to FIG. 14 to FIG. 16, the foregoing describes a process of switching layout positions of electronic devices after a plurality of electronic devices establish connections to the mouse 200. With reference to FIG. 17 to FIG. 20, the following describes a process of disconnecting and reconnecting an electronic device that has established a connection to the mouse 200.

FIG. 17 shows a scenario in which the first electronic device 300 is disconnected, and the second electronic device 400 and/or the third electronic device 50 remain/remains connected. A mapping relationship between an identifier of an electronic device, a position identifier of a layout position, and a channel identifier of a data channel is shown in Table 3.

**Table 3**

| | | | | |
|---|---|---|---|---|
| Channel | 1 | 2 | 3 | ... |
| Layout position | 11 | 21 | 12 | ... |
| Electronic device | 300 | 500 | 400 | ... |

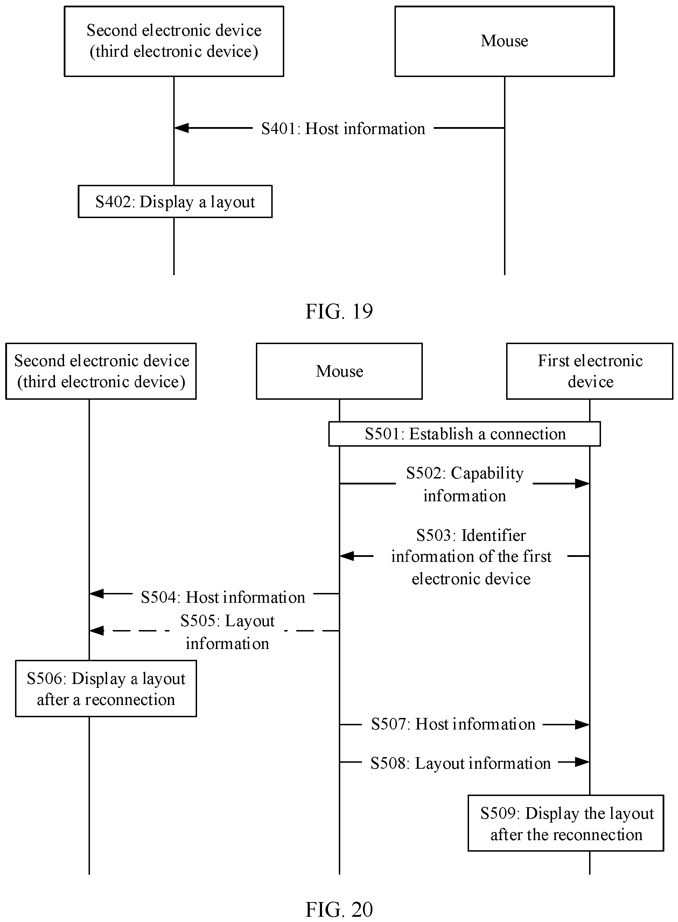

FIG. 19 shows still another communication method according to an embodiment of this application.

S401: The mouse 200 sends host information to the second electronic device 400 and the third electronic device 500.

In some embodiments, the mouse 200 detects that the first electronic device 300 is disconnected, to perform the operation in S401.

In some other embodiments, the first electronic device 300 may establish a connection/connections to the second electronic device 400 and/or the third electronic device 500. When the first electronic device 300 is powered off or disconnected from the second electronic device 400 and/or the third electronic device 500, the second electronic device 400 and/or the third electronic device 500 may send, to the mouse 200, information indicating that the first electronic device 300 is powered off or disconnected, or the like. After obtaining the information, the mouse 200 may send information to another electronic device connected to the mouse 200. The information indicates that the first electronic device 300 is powered off or disconnected.

In an embodiment, the second electronic device 400 and/or the third electronic device 500 may detect, through a sensor, whether a spatial position of the first electronic device 300 is changed, to determine whether the first electronic device 300 is disconnected from the mouse 200.

In another embodiment, the second electronic device 400 and/or the third electronic device 500 may determine, by detecting whether the first electronic device 300 is in a same network environment as the second electronic device 400 and/or the third electronic device 500, whether the first electronic device 300 is disconnected from the mouse 200.

In some embodiments, the mouse 200 may send indication information to the second electronic device 400 and the third electronic device 500. The indication information indicates that the first electronic device 300 is disconnected. For example, the indication information may include status information of a channel 1.

Because layout information, that is, a mapping relationship between a channel of the mouse 200 and a layout position, remains unchanged after the first electronic device 300 goes offline, the mouse 200 may not send the layout information to another electronic device connected to the mouse 200.

When the first electronic device 300 goes offline (for example, is powered off, is disconnected from the mouse 200, exits traversal, or is deleted), the first electronic device 300 is disconnected from the channel 1 of the mouse 200. In response to the event, the mouse 200 sends the host information to the second electronic device 400 and the third electronic device 500.

Specifically, the mouse 200 may send, to the second electronic device 400 and the third electronic device 500, information about a host currently connected to the mouse connection 200: (channel 2:Tablet-C9OHUSW3; channel 3:Laptop-BJ32QDSS).

In some embodiments, the mouse 200 may also send, to the second electronic device 400 and the third electronic device 500, the information about the host connected to the mouse 200 and related layout information, for example, (channel 2:21:Tablet-C9OHUSW3; channel 3:12:Laptop-BJ32QD8S).

In some embodiments, the mouse 200 may also send, to the second electronic device 400 and the third electronic device 500, layout positions of all channels of the mouse 200 and corresponding connection status information, for example, (channel 1:11:not connected; channel 2:21:Tablet-C9OHUSW3; channel 3:12:Laptop-BJ32QD8S).

S402: Display a layout of the second electronic device 400 and the third electronic device 500.

After the second electronic device 400 and the third electronic device 500 receive the host information sent by the mouse 200, the second electronic device 400 and the third electronic device 500 may display a new layout based on the host information.

In some embodiments, the second electronic device 400 and the third electronic device 500 display, through locally saved layout information and the host information received from the mouse 200, a layout obtained after the first electronic device 300 is disconnected.

In some other embodiments, the mouse 200 sends host information and layout information of all electronic devices that remain connected to the mouse 200 to the second electronic device 400 and the third electronic device 500, and the second electronic device 400 and the third electronic device 500 display, based on the information sent by the mouse 200, the layout obtained after the first electronic device 300 is disconnected.

Specifically, the electronic device may display, in response to an event that a user of the electronic device requests to display layout information, a layout of the remaining electronic devices after the first electronic device 300 is disconnected. Alternatively, when it is detected that an event that the electronic device is disconnected occurs, electronic devices that remain connected to the mouse 200 may display a layout of the remaining electronic devices that remain connected to the mouse 200.

In some embodiments, after receiving the host information sent by the mouse 200, the second electronic device 400 and the third electronic device 500 compare the host information with host information locally saved in the electronic device, and after determining that the host information is changed, display a new layout based on the received host information and corresponding layout information.

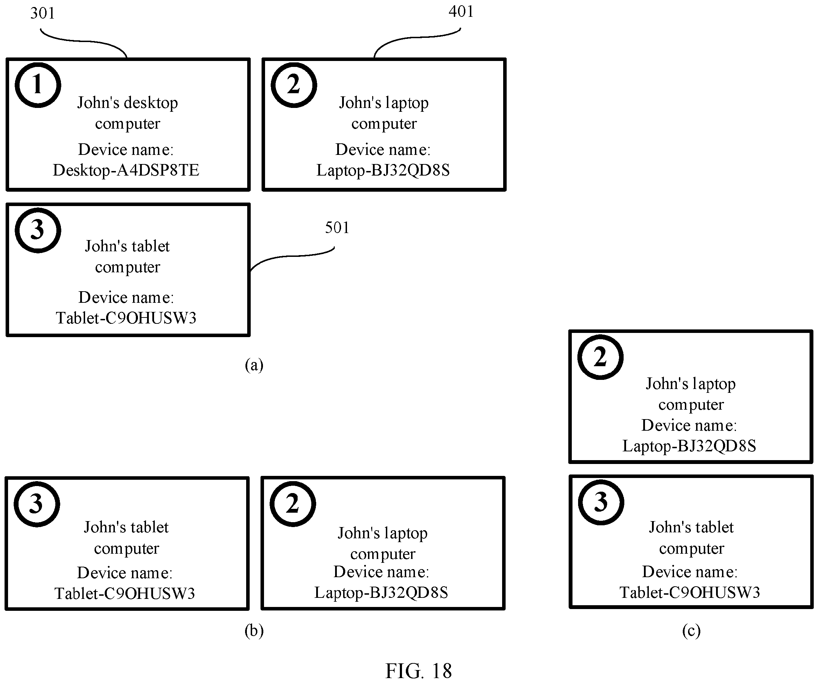

In an embodiment, before the first electronic device 300 is disconnected, layout positions of the three electronic devices are shown in (a) in FIG. 18. After the first electronic device 300 is disconnected, the layout positions of the second electronic device 400 and the third electronic device 500 are shown in (b) in FIG. 18 or (c) in FIG. 18.

In some embodiments, after an electronic device is disconnected, a layout position relationship between remaining electronic devices may be determined based on a quantity of the remaining electronic devices and a habit of performing mouse traversal by the user. For example, the user of an electronic device habitually uses traversal areas (for example, a second area 304 and a fourth area 306) on a left side and a right side of the electronic device. In this case, the electronic device may record the habit of using a traversal area by the user. Therefore, after the first electronic device 300 is disconnected, the layout of the second electronic device 400 and the third electronic device 500 may be shown in (b) in FIG. 18.

In some other embodiments, after the electronic device is disconnected, an electronic device that remains connected may prompt the user to select a layout for the remaining electronic devices.

It should be understood that sequence numbers of the processes do not mean an execution sequence in this method embodiment. The execution sequence of the processes should be determined based on functions and internal logic of the processes, and should not be construed as any limitation on the implementation processes of embodiments of this application.

When the first electronic device 300 establishes a connection to the mouse 200 again (for example, the first electronic device 300 is powered off and then powered on, and joins traversal again), a communication method between the mouse 200 and an electronic device is shown in FIG. 20.

S501: The first electronic device 300 establishes a connection to the mouse 200.

The mouse 200 may establish a connection to the first electronic device 300 in a wired and/or wireless manner. It should be noted that, for an electronic device that does not establish a connection to the mouse 200 for the first time, when establishing a connection to the electronic device again, the mouse 200 may connect to the electronic device in a saved connection manner to the electronic device.

That is, the first electronic device 300 has established a connection to the mouse 200 through a channel 1 previously, and when the first electronic device 300 is connected to the mouse 200 again, the mouse 200 is also connected to the first electronic device 300 through the channel 1.

S502: The mouse 200 sends capability information to the first electronic device 300.

An execution process of S502 is similar to that of S102. For details, refer to S102.

S503: The first electronic device 300 sends identifier information to the mouse 200.

An execution process of S503 is similar to that of S103. For details, refer to S103.

S504: The mouse 200 sends host information to the second electronic device 400 and the third electronic device 500.

An execution process of S504 is similar to that of S204. For details, refer to S204.

The host information includes a mapping relationship between an identifier of the reconnected first electronic device 300 and a channel of the mouse 200.

In some embodiments, the host information includes a mapping relationship between an identifier of the electronic device connected to the mouse 200 and a channel identifier of a channel for connecting the electronic device and the mouse 200.

In some embodiments, the mouse 200 may further send indication information to the second electronic device 400 and the third electronic device 500. The indication information indicates that the first electronic device 300 is reconnected. For example, the indication information may include status information of the channel 1.

In some other embodiments, the first electronic device 300 may establish a connection/connections to the second electronic device 400 and/or the third electronic device 500. When the first electronic device 300 is reconnected to the second electronic device 400 and/or the third electronic device 500, the second electronic device 400 and/or the third electronic device 500 may send, to the mouse 200, information indicating that the first electronic device 300 is reconnected. After obtaining the information, the mouse 200 may send information to another electronic device connected to the mouse 200. The information indicates that the first electronic device 300 is reconnected.

In an embodiment, the second electronic device 400 and/or the third electronic device 500 may detect, through a sensor, whether a spatial position of the first electronic device 300 is changed, to determine whether the first electronic device 300 is reconnected to the mouse 200.

In another embodiment, the second electronic device 400 and/or the third electronic device 500 may determine, by detecting whether the first electronic device 300 is in a same network environment as the second electronic device 400 and/or the third electronic device 500, whether the first electronic device 300 is reconnected to the mouse 200.

S505: Optionally, the mouse sends layout information to the second electronic device 400 and the third electronic device 500.

An execution process of S505 is similar to that of S205. For details, refer to S204.

The layout information includes a mapping relationship between a channel identifier of a data channel for connecting the mouse 200 and the reconnected first electronic device 300 and a position identifier of a layout position.

S506: Optionally, the second electronic device 400 and the third electronic device 500 display a layout obtained after the first electronic device 300 is reconnected.

Because layout positions of the electronic devices are not changed, when the host information is obtained, a relationship among the layout positions of the reconnected first electronic device 300, the second electronic device 400 and the third electronic device 500 may be determined based on the stored layout information and the acquired host information, to display the relationship among the layout positions of the electronic devices.

S507: The mouse 200 sends the host information to the first electronic device 300.

The host information includes a mapping relationship between a channel for connecting the reconnected first electronic device 300 and the mouse 200, a mapping relationship between a channel of the second electronic device 400 and the mouse 200, and a mapping relationship between a channel of the third electronic device 500 and the mouse 200.

S508: The mouse 200 sends the layout information to the first electronic device 300.

The layout information includes mapping relationships between channel identifiers of a plurality of data channels for establishing connections between the mouse 200 and the electronic device and position identifiers of a plurality of layout positions.

Optionally, the host information in S506 and the layout information in S507 may be sent to the first electronic device 300 together, or the host information and the layout information may be separately sent to the first electronic device 300.

S509: Optionally, the first electronic device 300 displays the layout.

The first electronic device 300 displays, based on the acquired host information and layout information, the layout after the first electronic device 300 is reconnected.

It should be understood that sequence numbers of the processes do not mean an execution sequence in this method embodiment. The execution sequence of the processes should be determined based on functions and internal logic of the processes, and should not be construed as any limitation on the implementation processes of embodiments of this application.

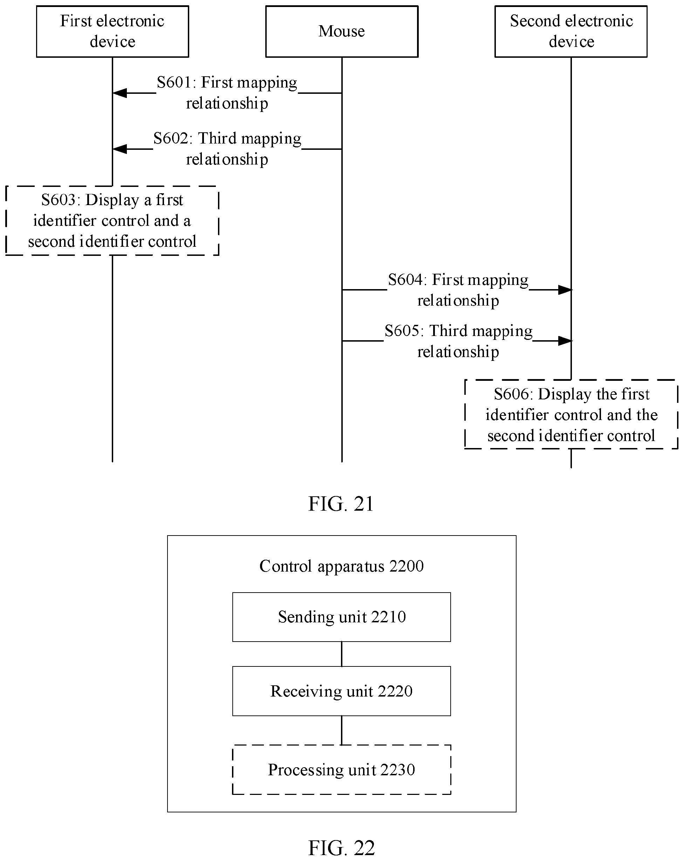

FIG. 21 shows still another communication method according to an embodiment of this application.

S601: A mouse sends a first mapping relationship to a first electronic device.

After establishing a connection to the first electronic device through a first data channel, the mouse may send the first mapping relationship to the first electronic device. The first mapping relationship is a mapping relationship between a first channel identifier and a first position identifier, the first channel identifier indicates the first data channel, and the first position identifier indicates a first layout position.

In some embodiments, the mouse may further send, to the first electronic device, information indicating that the mouse has a capability of sending the first mapping relationship. After obtaining the information, the first electronic device may send a first device identifier to the mouse. The first device identifier indicates the first electronic device.

In some embodiments, when the mouse receives the first device identifier, the mouse may save a mapping relationship between the first device identifier and the first channel identifier, that is, a second mapping relationship.

S602: The mouse sends a third mapping relationship to the first electronic device.

After establishing a connection to a second electronic device through a second data channel, the mouse may send the third mapping relationship to the first electronic device. The third mapping relationship is a mapping relationship between a second channel identifier and a second position identifier, the second channel identifier indicates the second data channel, and the second position identifier indicates a second layout position.

Optionally, the mouse may send the first mapping relationship and the third mapping relationship to the first electronic device together.

S603: Optionally, the first electronic device displays a first identifier control and a second identifier control.

The first identifier control indicates the first electronic device, the second identifier control indicates the second electronic device, the first identifier control is located at the first layout position, and the second identifier control is located at the second layout position.

After the first electronic device obtains the first mapping relationship and the third mapping relationship, the first electronic device may determine a layout position of the first electronic device and a layout position of the second electronic device based on the first mapping relationship, the second mapping relationship, the third mapping relationship, and a fourth mapping relationship.

In some embodiments, the second mapping relationship and the fourth mapping relationship are sent by the mouse to the first electronic device.

Specifically, the first electronic device may determine the layout position of the first electronic device based on the first mapping relationship and the second mapping relationship, and determine the layout position of the second electronic device based on the third mapping relationship and the fourth mapping relationship.

In some embodiments, when the first electronic device detects that the layout position of the first electronic device and/or the layout position of the second electronic device are/is changed, the first electronic device may send a changed first mapping relationship and third mapping relationship to the mouse, so that the mouse may send the received changed first mapping relationship and third mapping relationship to another electronic device.

A change in a layout position of an electronic device may be that a user of the electronic devices directly changes a layout position relationship between the electronic devices, or may be that the user of the electronic devices actually changes a spatial position relationship between the electronic devices. An electronic device prompts, based on a change in a spatial position of the electronic device, the user to change a layout position of the electronic device, and in response to an operation of confirming the change by the user, the electronic device changes a layout of the electronic devices based on the spatial position relationship between the electronic devices.

The mouse may further detect whether the second electronic device is connected to the mouse.

If the mouse is disconnected from the second electronic device and the mouse is connected to the first electronic device, the mouse may further send a first message to the first electronic device. The first message indicates that the second electronic device is disconnected.

In some embodiments, the first message may include the second mapping relationship.

After receiving the first message, the first electronic device may determine the layout position of the first electronic device based on the first mapping relationship and the second mapping relationship that are locally saved.

If the mouse is disconnected from an electronic device and then reconnected, the mouse may send the first mapping relationship, the second mapping relationship, the third mapping relationship, and the fourth mapping relationship to the second electronic device. The second electronic device may determine the layout position of the first electronic device and the layout position of the second electronic device based on these mapping relationships.

The mouse may send a third message to the first electronic device. The third message indicates that the second electronic device is reconnected. The third message may include the fourth mapping relationship. Because the first electronic device locally saves the first mapping relationship and the third mapping relationship, after receiving the fourth mapping relationship, the first electronic device may determine the layout position of the first electronic device and the layout position of the second electronic device.

S604: The mouse sends the first mapping relationship to the second electronic device.

After establishing the connection to the first electronic device through the first data channel, the mouse may send the first mapping relationship to the second electronic device. The first mapping relationship is a mapping relationship between the first data channel and a layout position of the first data channel.

Optionally, the mouse may send the first mapping relationship and the third mapping relationship to the first electronic device together.

S605: The mouse sends the third mapping relationship to the second electronic device.

After establishing the connection to the second electronic device through the second data channel, the mouse may send the third mapping relationship to the second electronic device. The third mapping relationship is a mapping relationship between the second data channel and a layout position of the second data channel.

In some embodiments, the mouse may further send, to the second electronic device, information indicating that the mouse has a capability of sending the second mapping relationship. After obtaining the information, the first electronic device may send a second identifier to the mouse. The second identifier indicates the first electronic device.

In some embodiments, when the mouse receives the second identifier, the mouse may save a mapping relationship between the second identifier and the second data channel, that is, the fourth mapping relationship.

S606: Optionally, the second electronic device displays the first identifier control and the second identifier control.

The first identifier control indicates the first electronic device, the second identifier control indicates the second electronic device, the first identifier control is located at the first layout position, and the second identifier control is located at the second layout position.

After the second electronic device obtains the first mapping relationship and the third mapping relationship, the second electronic device may determine the layout position of the first electronic device and the layout position of the second electronic device based on the first mapping relationship, the second mapping relationship, the third mapping relationship, and the fourth mapping relationship.

In some embodiments, the second mapping relationship and the fourth mapping relationship are sent by the mouse to the second electronic device.

Specifically, the second electronic device may determine the layout position of the first electronic device based on the first mapping relationship and the second mapping relationship, and determine the layout position of the second electronic device based on the third mapping relationship and the fourth mapping relationship.

In some embodiments, when the first electronic device detects that the layout position of the first electronic device and/or the layout position of the second electronic device are/is changed, the first electronic device may send the changed first mapping relationship and third mapping relationship to the mouse, so that the mouse may send the received changed first mapping relationship and third mapping relationship to another electronic device.

It should be understood that sequence numbers of the foregoing processes do not mean an execution sequence in the foregoing method embodiments. The execution sequence of the processes should be determined based on functions and internal logic of the processes, and should not be construed as any limitation on the implementation processes of embodiments of this application.

Based on a same inventive concept, embodiments of this application further provide a communication apparatus 2200 of an electronic device. As shown in FIG. 22, the communication apparatus 2200 of the electronic device includes a sending unit 2210 and a receiving unit 2220. The sending unit 2210 is configured to perform a sending action performed by a mouse in S101, S102, S204, S205, S305, S401, S507, or the like in FIG. 9, FIG. 12, FIG. 16, FIG. 19, or FIG. 21, for example, a sending action of sending host information and layout information to the electronic device.

The receiving unit 2220 is configured to perform a receiving action performed by the mouse in S103, S203, S302, S503, or the like in FIG. 9, FIG. 12, FIG. 16, FIG. 19, or FIG. 21, for example, a receiving action of receiving identifier information of the electronic device sent by the electronic device.

In some embodiments, the communication apparatus 2200 may further include a processing unit 2230. The processing unit 2230 is configured to perform a processing operation performed by the mouse in FIG. 9, FIG. 12, FIG. 16, FIG. 19, or FIG. 21.

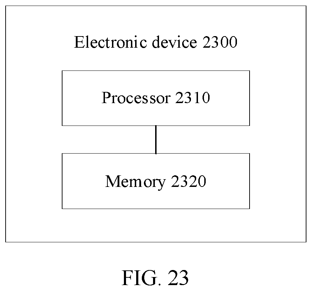

As shown in FIG. 23, embodiments of this application further provide an electronic device 2300. The electronic device 2300 includes a processor 2310 and a memory 2320. The processor 2310 is configured to perform sending and receiving actions performed by a mouse in FIG. 9, FIG. 12, FIG. 16, FIG. 19, or FIG. 21. The memory 2320 stores one or more computer programs. The one or more computer programs include instructions. When the instructions are executed by one or more processors, any communication method of the electronic device described above is performed.

Embodiments of this application further provide a computer program product. The computer program product includes computer program code. When the computer program code is run on a computer, the computer is enabled to implement the methods in embodiments shown in FIG. 3 to FIG. 21.

Embodiments of this application further provide a computer-readable storage medium. The computer-readable storage medium stores computer instructions. When the computer instructions are run on a computer, the computer is enabled to implement the methods in embodiments shown in FIG. 3 to FIG. 21.

Embodiments of this application further provide a chip, including a processor, configured to read instructions stored in a memory. When the processor executes the instructions, the chip is enabled to implement the methods in embodiments shown in FIG. 3 to FIG. 21.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located at one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system, wherein the system comprises a mouse, a first electronic device, and a second electronic device, the mouse is connected to the first electronic device through a first data channel, and the mouse is connected to the second electronic device through a second data channel;
the mouse is configured to store a first association relationship between a first channel identifier, a first position identifier, and a first device identifier and a second association relationship between a second channel identifier, a second position identifier, and a second device identifier; and
the mouse is further configured to send the first association relationship and the second association relationship to the first electronic device and the second electronic device, wherein
the first channel identifier indicates the first data channel, the second channel identifier indicates the second data channel, the first device identifier indicates the first electronic device, the second device identifier indicates the second electronic device, the first position identifier indicates a layout position of the first electronic device, and the second position identifier indicates a layout position of the second electronic device.

2. The communication system according to claim 1, wherein
if it is detected that the mouse is disconnected from the second electronic device and the mouse is connected to the first electronic device, the mouse is further configured to send a first message to the first electronic device, wherein the first message indicates that the second electronic device is disconnected.

3. The communication system according to claim 1 or 2, wherein
the first electronic device is further configured to detect whether the second electronic device is connected to the mouse; and
if it is detected that the second electronic device is disconnected from the mouse and the first electronic device is connected to the mouse, the first electronic device is further configured to send a second message to the mouse, wherein the second message indicates that the second electronic device is disconnected.

4. The communication system according to any one of claims 1 to 3, wherein the first association relationship comprises a first mapping relationship and a second mapping relationship, and the second association relationship comprises a third mapping relationship and a fourth mapping relationship;
if the mouse is disconnected from the second electronic device and then reconnected, the mouse is further configured to send the first mapping relationship, the second mapping relationship, the third mapping relationship, and the fourth mapping relationship to the second electronic device; and
the mouse is further configured to send a third message to the first electronic device, wherein the third message indicates that the second electronic device is reconnected, wherein
the first mapping relationship is a mapping relationship between the first channel identifier and the first position identifier, the second mapping relationship is a mapping relationship between the first channel identifier and the first device identifier, the third mapping relationship is a mapping relationship between the second channel identifier and the second position identifier, and the fourth mapping relationship is a mapping relationship between the second channel identifier and the second device identifier.

5. The communication system according to any one of claims 1 to 4, wherein the first association relationship comprises the first mapping relationship, the second association relationship comprises the third mapping relationship, the first mapping relationship is the mapping relationship between the first channel identifier and the first position identifier, and the third mapping relationship is the mapping relationship between the second channel identifier and the second position identifier;
the first electronic device is further configured to send a changed first mapping relationship and a changed third mapping relationship to the mouse in response to a first operation;
the mouse is further configured to store the changed first mapping relationship and the changed third mapping relationship; and
the mouse is further configured to send the changed first mapping relationship and the changed third mapping relationship to the second electronic device.

6. The communication system according to claim 5, wherein the first operation comprises: changing a spatial position relationship between the first electronic device and the second electronic device; and/or
changing a layout position relationship between the first electronic device and the second electronic device.

7. The communication system according to any one of claims 1 to 6, wherein the first association relationship comprises the first mapping relationship, the second association relationship comprises the third mapping relationship, the first mapping relationship is the mapping relationship between the first channel identifier and the first position identifier, the third mapping relationship is the mapping relationship between the second channel identifier and the second position identifier, and the first mapping relationship and the third mapping relationship are saved to the mouse in a preconfigured manner before delivery or saved to the mouse after being changed by a user.

8. The communication system according to any one of claims 1 to 7, wherein
the first electronic device is further configured to display a first identifier control and a second identifier control based on the first association relationship and the second association relationship; and
the second electronic device is further configured to display the first identifier control and the second identifier control based on the first association relationship and the second association relationship, wherein
the first identifier control indicates the first electronic device, the first identifier control is located at the layout position of the first electronic device, the second identifier control indicates the second electronic device, and the second identifier control is located at the layout position of the second electronic device.

9. A communication method, comprising:
establishing, by a mouse, a connection to a first electronic device through a first data channel;
storing, by the mouse, a first mapping relationship between a first channel identifier and a first position identifier, wherein the first channel identifier indicates the first data channel, the first position identifier indicates a first layout position, and the first mapping relationship is for determining a layout position of the first electronic device; and
sending, by the mouse, the first mapping relationship to the first electronic device.

10. The communication method according to claim 9, wherein before the sending, by the mouse, the first mapping relationship to the first electronic device, the method further comprises:
receiving, by the mouse, a first device identifier sent by the first electronic device, wherein the first device identifier indicates the first electronic device; and
saving, by the mouse, a second mapping relationship between the first channel identifier and the first device identifier, wherein the second mapping relationship is for determining the layout position of the first electronic device.

11. The communication method according to claim 10, wherein the method further comprises:
establishing, by the mouse, a connection to a second electronic device through a second data channel;
sending, by the mouse, the first mapping relationship and the second mapping relationship to the second electronic device; and
sending, by the mouse, a third mapping relationship between a second channel identifier and a second position identifier and a fourth mapping relationship between the second channel identifier and a second device identifier to the first electronic device, wherein the second channel identifier indicates the second data channel, the second device identifier indicates the second electronic device, and the second position identifier indicates a second layout position.

12. The control method according to claim 11, wherein the method further comprises:
detecting, by the mouse, whether the second electronic device is connected to the mouse; and
if the mouse is disconnected from the second electronic device and the mouse is connected to the first electronic device, sending, by the mouse, a first message to the first electronic device, wherein the first message indicates that the second electronic device is disconnected.

13. The communication method according to claim 12, wherein the method further comprises:
if the mouse is disconnected from the second electronic device and then reconnected, sending, by the mouse, the first mapping relationship, the second mapping relationship, the third mapping relationship, and the fourth mapping relationship to the second electronic device; and
sending, by the mouse, a third message to the first electronic device, wherein the third message indicates that the second electronic device is reconnected.

14. The communication method according to any one of claims 11 to 13, wherein the method further comprises:
receiving, by the mouse, a changed first mapping relationship and a changed third mapping relationship that are sent by the first electronic device; and
sending, by the mouse, the changed first mapping relationship and the changed third mapping relationship to the second electronic device.

15. The communication method according to claim 14, wherein the method further comprises:
saving, by the mouse, the changed first mapping relationship and the changed third mapping relationship.

16. A communication method, comprising:
establishing, by a first electronic device, a connection to a mouse through a first data channel; and
receiving, by the first electronic device, a first mapping relationship that is between a first channel identifier and a first position identifier and that is sent by the mouse, wherein the first channel identifier indicates the first data channel, the first position identifier indicates a first layout position, and the first mapping relationship is for determining a layout position of the first electronic device.

17. The communication method according to claim 16, wherein the method further comprises:
if the mouse is also connected to a second electronic device, displaying, by the first electronic device, prompt information based on the layout position of the first electronic device, wherein the prompt information indicates to traverse from the first electronic device to a traversal area of the second electronic device.

18. The communication method according to claim 16 or 17, wherein the method further comprises:
detecting, by the first electronic device, a first trigger event, wherein the first trigger event is that the first electronic device establishes the connection to the mouse; and
sending, by the first electronic device, a first device identifier to the mouse in response to the first trigger event, wherein the first device identifier indicates the first electronic device.

19. A mouse, comprising a processor and a memory, wherein the memory is configured to store program instructions, and the processor is configured to invoke the program instructions to perform the method according to any one of claims 9 to 15.

20. An electronic device, comprising a processor and a memory, wherein the memory is configured to store program instructions, and the processor is configured to invoke the program instructions to perform the method according to any one of claims 16 to 18.

21. A computer program product, wherein the computer program product comprises computer program code, and when the computer program code is run on a computer, the method according to any one of claims 9 to 15 or the method according to any one of claims 16 to 18 is performed.

22. A computer-readable storage medium, wherein the computer-readable storage medium stores a computer program, and when the computer program is executed by a computer, the method according to any one of claims 9 to 15 or the method according to any one of claims 16 to 18 is implemented.

23. A chip, comprising a processor, configured to read instructions stored in a memory, wherein when the processor executes the instructions, the chip is enabled to implement the method according to any one of claims 9 to 15 or the method according to any one of claims 16 to 18.
